# EUROPEAN PATENT SPECIFICATION

(11) **EP 4 116 732 B1**
(45) Date of publication and mention of the grant of the patent: **14.10.2026**
(21) Application number: 20922878.2
(22) Date of filing: 17.12.2020
(51) Int. Cl.: G01S 7/481, G01S 17/931, G02B 26/08, G02B 26/10, G01S 7/499, G02B 19/00, G02B 27/28

(54) **OPTICAL DEVICE, VEHICLE-MOUNTED SYSTEM, AND MOVING DEVICE**
OPTISCHE VORRICHTUNG, FAHRZEUGMONTIERTES SYSTEM UND BEWEGUNGSVORRICHTUNG
DISPOSITIF OPTIQUE, SYSTÈME MONTÉ SUR VÉHICULE ET DISPOSITIF MOBILE

(30) Priority: 02.03.2020 JP 2020034831; 01.12.2020 JP 2020199812
(43) Date of publication of application: 11.01.2023
(73) Proprietor: Canon Kabushiki Kaisha, Ohta-ku Tokyo 146-8501 (JP)
(72) Inventor: NAKANO Masatsugu, Tokyo 146-8501 (JP)
(74) Representative: TBK
(86) International application number: PCT/JP2020/047209
(87) International publication number: WO 2021/176799

(56) References cited:
- WO-A1-2008/078543
- WO-A1-2012/099151
- DE-A1- 102015 105 393
- JP-A- 2008 216 520
- JP-A- 2009 087 413
- JP-A- 2020 504 291
- JP-A- H0 527 188
- JP-A- H1 183 755
- JP-A- H11 203 701
- US-A1- 2013 301 096
- US-A1- 2019 271 767

## Description

### FIELD OF ART

The present invention relates to an optical apparatus, an in-vehicle system, and a moving apparatus, each of which detects an object by receiving reflected light from the illuminated object.

### BACKGROUND ART

One known method for measuring a distance to an object is LiDAR (Light Detection and Ranging) that calculates the distance based on a period necessary to receive reflected light from the illuminated object or a phase of the reflected light.

The reflected light from the object becomes weaker as the object is more distant. In order to receive a large reflected light amount from the object, a diameter of a drive mirror for a deflection unit for illuminating and scanning the object may be increased, but in a case where the diameter of the drive mirror is increased, a changeable angle of the drive mirror becomes smaller and a scanning range of the object becomes narrower.

Document US 2018 / 143 302 A1discloses an apparatus that introduces illumination light from each of a plurality of light sources to a deflection unit at a different angle, and illuminates an object with the illumination light for each light source, in order to expand a scanning range of the object.

Document JP H11- 203 701 A discloses an apparatus that separates illumination light from a single light source using a prism, and introduces two illumination light beams to a deflection unit at different incident angles.

Document DE 10 2015 105 393 A1 discloses a laser sensor for a vehicle having a diffractive member, which corresponds to an optical apparatus according to the preamble of any of independent claims 1 to 3.

Document US 2019 / 271 767 A1 discloses systems and methods that use LIDAR technology. In one example, a LIDAR system includes at least one processor configured to: control activation of at least one light source for illuminating a field of view; receive from at least one sensor a reflection signal associated with an object in the field of view, a time lapse between light leaving the at least one light source and reflection impinging on the least one sensor constituting a time of flight; and alter an amplification parameter associated with the at least one sensor during the time of flight.

Document US 2013 / 301 096 A1 discloses an optical scanning device and a scanning inspection apparatus. The optical scanning device includes a polarization switching unit that switches the polarization direction of a beam at a predetermined switching timing; at least one polarization beam splitter that splits the beam into two optical paths in accordance with the polarization direction switched by the polarization switching unit; a reflecting optical system that causes the beams split by the polarization beam splitter to have relative angles in the same plane so as to make the beams meet at the same location; and a scanner that scans the beams made to meet at the same location by means of the reflecting optical system in a direction parallel to the plane in synchronization with the switching timing of the polarization switching unit.

### SUMMARY OF THE INVENTION

### PROBLEMS TO BE SOLVED BY THE INVENTION

However, the apparatus disclosed in Document US 2018 / 143 302 A1needs the plurality of light sources and light receiving units that receive the reflected light from the object and correspond to the light sources, and thus the number of components is large and the apparatus becomes large.

The apparatus disclosed in Document JP H11- 203 701 A cannot expand the scanning range because one illumination light beam illuminates the object and the other illumination light beam is used to detect an angle of the deflection unit.

An object of the present invention is to provide an optical apparatus, an in-vehicle system, and a moving apparatus, each of which is small and has a wide scanning range.

This object is achieved by an optical apparatus according to claim 1 or according to claim 2, or according to claim 3, an in-vehicle system according to claim 20, and a moving apparatus according to claim 25. Advantageous further developments are as set forth in the respective dependent claims.

### EFFECT OF THE INVENTION

The present invention can provide an optical apparatus, an in-vehicle system, and a moving apparatus, each of which is small and has a wide scanning range.

### BRIEF DESCRIPTION OF THE DRAWINGS

FIG. 1 is a schematic view of principal part of an optical apparatus according to a first embodiment.
FIG. 2 is a schematic diagram of principal part of a branching optical element according to the first embodiment.
FIG. 3 is an optical path diagram of illumination light transmitting through one of passage areas.
FIG. 4 is an optical path diagram of illumination light transmitting through another passage area.
FIG. 5 is an optical path diagram of reflected light corresponding to the illumination light transmitting through one of the passage areas.
FIG. 6 is an optical path diagram of reflected light corresponding to the illumination light transmitting through the other passage area.
FIG. 7 is an explanatory diagram of an illumination range.
FIG. 8 is a schematic diagram of principal part of a variation of the branching optical element according to the first embodiment.
FIG. 9 is a schematic diagram of principal part of another variation of the branching optical element according to the first embodiment.
FIG. 10 is a schematic diagram of principal part of another variation of the branching optical element according to the first embodiment.
FIG. 11 is a schematic view of principal part of an optical apparatus according to a second embodiment.
FIG. 12 is a schematic view of principal part of a branching optical element according to the second embodiment.
FIG. 13 is an optical path diagram of illumination light transmitting through one of the passage areas.
FIG. 14 is an optical path diagram of illumination light transmitting through another passage area.
FIG. 15 is an optical path diagram of reflected light corresponding to the illumination light transmitting through one of the passage areas.
FIG. 16 is an optical path diagram of reflected light corresponding to the illumination light transmitting through the other passage area.
FIG. 17 is a schematic diagram of principal part of a variation of the branching optical element according to the second embodiment.
FIG. 18 is a schematic view of principal part of an optical apparatus according to a third embodiment.
FIG. 19 is a schematic view of principal part of an optical apparatus according to a fourth embodiment.
FIG. 20 is an optical path diagram of illumination light according to the fourth embodiment.
FIG. 21 is a schematic diagram of principal part of a branching optical element according to the fourth embodiment.
FIG. 22 is a diagram showing a light amount distribution in a case where the illumination light according to the fourth embodiment passes through the branching optical element.
FIG. 23 is an optical path diagram of reflected light according to the fourth embodiment.
FIG. 24 is a schematic diagram of principal part of a variation of the branching optical element according to the fourth embodiment.
FIG. 25 is a schematic diagram of principal part of another variation of the branching optical element according to the fourth embodiment.
FIG. 26 is a configuration diagram of an in-vehicle system according to this embodiment.
FIG. 27 is a schematic diagram of a vehicle (moving apparatus) according to this embodiment.
FIG. 28 is a flowchart showing an operation example of the in-vehicle system according to this embodiment.

### EMBODIMENTS FOR PRACTICING THE INVENTION

Referring now to the accompanying drawings, a detailed description will be given of embodiments according to the present invention. Corresponding elements in respective figures will be designated by the same reference numerals, and a duplicate description thereof will be omitted.

An optical apparatus using LiDAR includes an illumination system that illuminates an object and a light receiving system that receives reflected or scattered light from the object. LiDAR can be classified into a coaxial system in which some of optical axes of the illumination system and the light receiving system coincide with each other, and a noncoaxial system in which these optical axes do not coincide with each other. The optical apparatus according to this embodiment is suitable for the coaxial system of LiDAR.

The optical apparatus according to each embodiment is used as an automatic driving support system for a vehicle such as an automobile, for example. The object is, for example, a pedestrian, an obstacle, a vehicle, etc., and is separated by about 1 to 300 m. The optical apparatus according to each embodiment measures a distance to the object, and controls the direction and speed of the vehicle based on the measurement result.

### FIRST EMBODIMENT

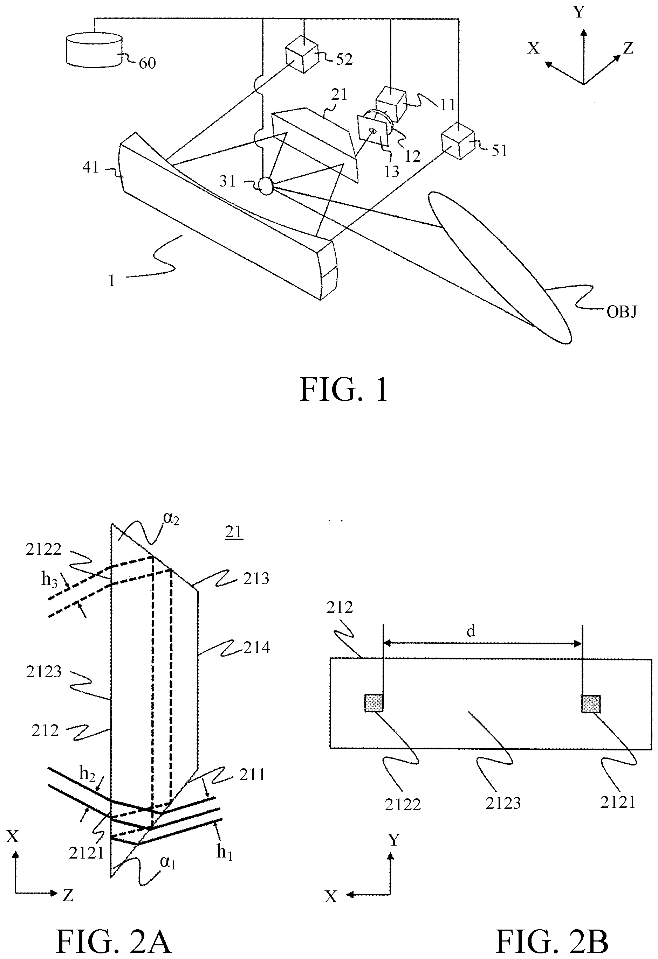

FIG. 1 is a schematic view of the principal part of an optical apparatus 1 according to this embodiment. The optical apparatus 1 includes a light source 11, a collimator lens 12, a diaphragm 13, a branching optical element (light guide unit, branching unit) 21, a drive mirror (deflection unit) 31, a condenser mirror 41, and light receiving elements (light receiving units) 51 and 52, and a control unit 60.

A coordinate system according to this embodiment is defined as illustrated in FIG. 1. More specifically, one swing direction of the drive mirror 31 is set to an X-axis, the other swing direction orthogonal to the X-axis is set to a Y-axis, and a Z-axis is a direction orthogonal to the X-axis and the Y-axis.

The light source 11 can use a semiconductor laser or the like, which is a laser having high energy concentration and good directivity. For example, a semiconductor laser having a wavelength in the near-infrared region is used. The diaphragm 13 has an elliptical shape having a minor axis of 1.3 mm parallel to the Y-axis direction and a major axis of 1.6 mm. Divergent light (illumination light) emitted from the light source 11 is collimated by the collimator lens 12 and becomes parallel light. The parallel light here includes not only a strictly parallel light beam but also weakly divergent light and weakly convergent light. After passing through the collimator lens 12, the illumination light is restricted by the diaphragm 13 and travels to the branching optical element 21.

FIG. 2 is a schematic diagram of the principal part of the branching optical element 21 according to this embodiment. The branching optical element 21 has a first surface 211, a second surface 212, a third surface 213, and a fourth surface 214. FIG. 2(a) illustrates a path of the illumination light passing through the branching optical element 21. FIG. 2B is a view of the second surface 212 viewed from a plane normal direction.

The second surface 212 has passage areas 2121 and 2122 for transmitting the illumination light, and a reflective area (reflective surface) 2123 for reflecting the reflected light from an object OBJ. A distance d between the passage areas 2121 and 2122 is 15.41 mm. In this embodiment, each of the passage areas 2121 and 2122 has a rectangular shape of 1.3 mm in the Y-axis direction and 1.35 mm in the Z-axis direction, but the present invention is not limited to this example. For example, it may have a semicircular shape. An antireflection film may be formed on the passage areas 2121 and 2122. In the reflective area 2123, a layer that reflects incident light from the inside and incident light from the outside of the branching optical element 21 is made of a metal film, a dielectric film, or the like. A layer for absorbing light may be formed on a non-effective area where the light of the reflective area 2123 does not reach.

The branching optical element 21 may be made of a material having a high transmittance for the wavelength of the light emitted from the light source 11 and having few impurities and defects. In this embodiment, the material for the branching optical element 21 has a refractive index of 1.972.

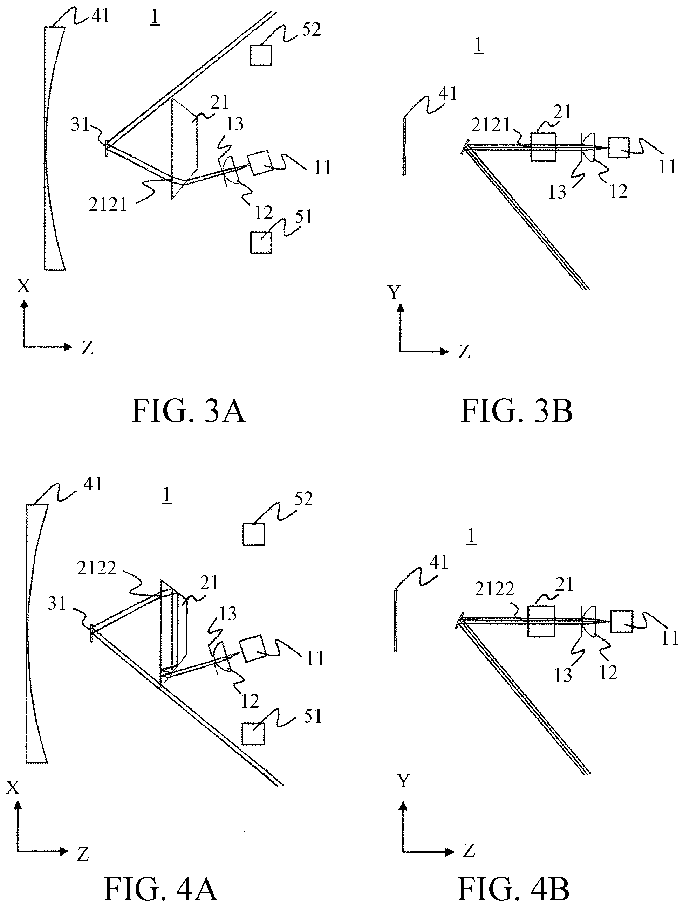

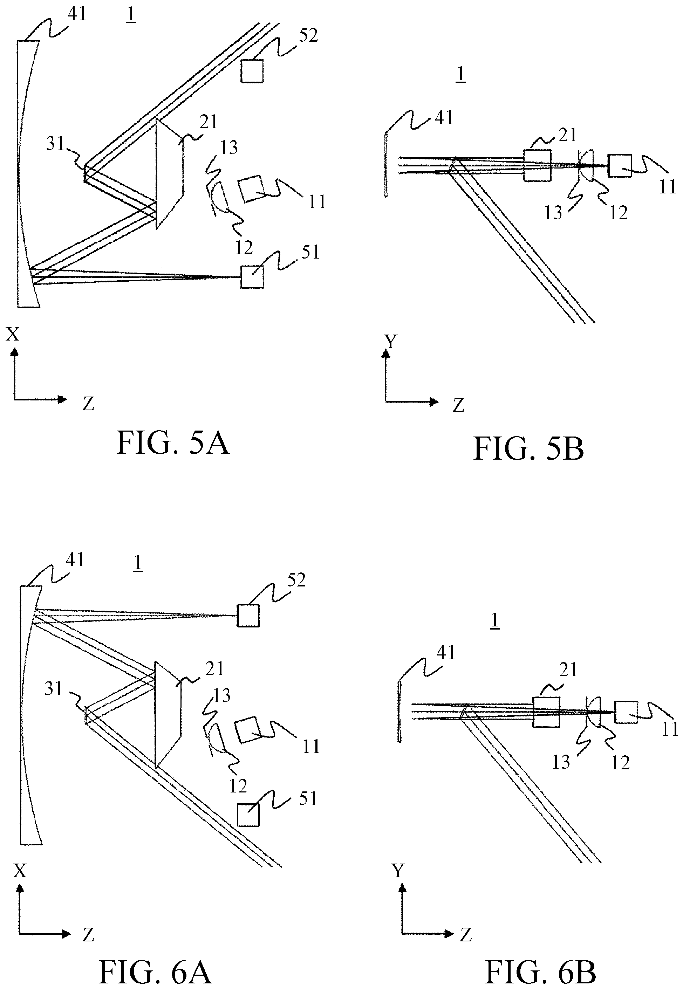

FIG. 3 is an optical path diagram of the illumination light transmitting through the passage area (first passage area) 2121. FIG. 4 is an optical path diagram of the illumination light transmitting through the passage area (second passage area) 2122. FIG. 5 is an optical path diagram of the reflected light from the object OBJ illuminated by the illumination light transmitting through the passage area 2121. FIG. 6 is an optical path diagram of the reflected light from the object OBJ illuminated by the illumination light transmitting through the passage area 2122. In each figure, (a) is an XZ sectional view, and (b) is a YZ sectional view.

This embodiment illustrates a means for branching the light from the first surface by spatially dividing the light.

The light that has passed through the diaphragm 13 is refracted on the first surface 211 according to Snell's law, travels in the branching optical element 21, and reaches the second surface 212. Of the illumination light that has reached the second surface 212, the light that has entered the passage area 2121 is refracted and emitted according to Snell's law. Hereinafter, this optical path will be referred to as a first optical path (solid line in FIG. 2(a)). On the other hand, of the illumination light that has reached the second surface 212, the light that has entered the reflective area 2123 is reflected, reaches the first surface 211 again, and then is totally reflected toward the third surface 213 having the reflective area. The light incident on the third surface 213 is totally reflected, refracted in the passage area 2122 according to Snell's law, and emitted. Hereinafter, this optical path will be referred to as a second optical path (broken line in FIG. 2(a)). In this way, the illumination light is branched into two illumination lights (first illumination light and second illumination light) by the branching optical element 21, and the first and second illumination lights are emitted from the first and second passage areas so that their emission directions form an angle. "Forming an angle" does not include a case where the emission directions of the two illumination lights are parallel (the emission directions of the two illumination lights form 0 degrees). In addition, that includes a case where the passage areas are not formed on the same surface and the emission angles of the two illumination lights are equal to each other but the emission directions of the two illumination lights are different from each other.

The drive mirror 31 is a biaxial drive mirror configured to swing around the X-axis and the Y-axis, and is, for example, a Micro Electro Mechanical System (MEMS) mirror. In this embodiment, the drive mirror 31 has a swing angle of ±15 degrees and a driving frequency of about 1 kHz. The drive mirror 31 deflects the illumination light to scan the object OBJ, and also deflects the reflected light from the object OBJ to guide the light to the branching optical element 21.

The illumination light of the first optical path and the second optical path is reflected by the drive mirror 31, passes under the branching optical element 21 and the light source 11, and then illuminates the object OBJ while being two-dimensionally scanned. Two light beams emitted from the branching optical element 21 are incident on the drive mirror 31 at different angles and are scanned to illuminate different areas. That is, the illumination range can be expanded.

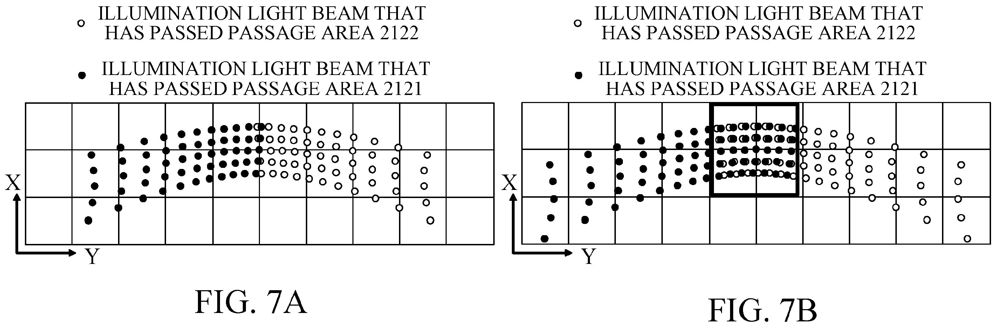

FIG. 7 is an explanatory diagram of an illumination range. FIG. 7(a) illustrates the illumination range in a case where the drive mirror 31 swings by ±6 degrees around the X-axis and ±15 degrees around the Y-axis. In this case, since the two illumination ranges are set so as to exactly overlap each other at the center of the entire illumination range, the entire illumination range is greatly expanded. FIG. 7(b) illustrates the illumination range in a case where the drive mirror 31 swings by ±6 degrees around the X-axis and ±24 degrees around the Y-axis. In this case, since the two illumination ranges are set so as to overlap each other by ±9 degrees at the center of the entire illumination range, the distance can be measured by overlapping the central portions while expanding the entire illumination range.

The condenser mirror 41 is used as the same mirror for the lights in the first optical path and the second optical path, but may be separated at a central position where the light does not pass.

The light receiving elements 51 and 52 can use Photodiode (PD), Avalanche Photodiode (APD), Singel PHTON Avalanche Diode (SPAD), and the like.

The reflected light from the object OBJ is deflected to the branching optical element 21 by the drive mirror 31. More specifically, the reflected light of the first optical path passes under the light source 11 and the branching optical element 21 in the optical path in a direction opposite to the illumination light, then enters the drive mirror 31 and is biased toward a position near the passage area 2121. Of the deflected light, the light that reaches the reflective area 2123 is reflected toward the condenser mirror 41, condensed on and received by the light receiving element 51. The reflected light on the second optical path passes under the light source 11 and the branching optical element 21 in the optical path in the direction opposite to the illumination light, then enters the drive mirror 31, and is deflected toward a position near the passage area 2122. Of the deflected light, the light that reaches the reflective area 2123 is reflected toward the condenser mirror 41, condensed on and received by the light receiving element 52.

The control unit 60 controls the light source 11, the drive mirror 31, and the light receiving elements 51 and 52. More specifically, the control unit 60 drives the light source 11 and the drive mirror 31 at predetermined drive voltages and driving frequencies, respectively, and measures a light receiving waveform during light-receiving by the light receiving elements 51 and 52 at specific frequencies. The control unit 60 determines the distance to the object OBJ using a difference between the light receiving time of the light receiving elements 51 and 52 and the light emitting time of the light source 11, or a difference between a phase of the light receiving signal obtained by the light receiving elements 51 and 52 and a phase of the output signal of the light source 11.

The following expression (1) may be satisfied where α₁ is an angle (degree) formed between the first surface 211 and the second surface 212 of the branching optical element 21 and α₂ is an angle (degree) formed between the second surface 212 and the third surface 213: ${α}_{1} + {α}_{2} = 90$ (1)

By satisfying the expression (1), the reflected light reflected by the first surface 211 in the second optical path becomes parallel to the second surface 212, and the light emitted from the passage area 2121 and the light emitted from the passage area 2122 can have angles with the same absolute value but different signs. As a result, the angles incident on the drive mirror 31 have the same absolute value, but the directions are opposite to each other, so that the areas of the respective illumination ranges are equal, and the object OBJ can be illuminated symmetrically with respect to the Y-axis.

In this embodiment, the angle α₁ formed between the first surface 211 and the second surface 212 is 38.2 degrees about the Y-axis, and the angle α₂ formed between the second surface 212 and the third surface 213 is 51.8 degrees about the Y-axis. That is, the configuration according to this embodiment satisfies the expression (1), and as illustrated in FIG. 7, the areas of the respective illumination ranges are equal.

While the illumination light passes through the branching optical element 21, it is refracted twice on the first surface 211 and the second surface 212, and the light beam diameter (beam diameter) is multiplied. In this embodiment, a light beam diameter h₂ of the illumination light emitted from the passage area 2121 and a light beam diameter h₃ of the illumination light emitted from the passage area 2122 are set equal to each other. In this case, the following expression (2) is established between a light beam diameter h₁ of the illumination light restricted by the diaphragm 13 and entering the first surface 211 and the light beam diameter h₂ of the illumination light emitted from the passage area 2121. θ₁, θ₂, θ₃, and θ₄ are an incident angle on the first surface 211, an exit angle from the first surface 211, an incident angle on the second surface 212, and an exit angle from the passage area 2121 of the illumination light.$\frac{2 {h}_{2}}{{h}_{1}} = \frac{{cosθ}_{2} {cosθ}_{4}}{{cosθ}_{1} {cosθ}_{3}}$ (2)

Expression (2) is larger than 1 in a case where the angle θ₁ at which the illumination light enters the first surface 211 is larger than the angle θ₄ at which the illumination light is emitted from the passage area 2121. That is, the light beam diameter of the illumination light is expanded while the illumination light passes through the branching optical element 21. In a case where the light beam diameter is expanded, a divergence angle of the illumination light becomes smaller, and the spread of the illumination light in a distant place can be suppressed. By suppressing the divergence of the illumination light, it is possible to improve the resolution and the illuminance at a distant place.

In this embodiment, the angles θ₁, θ₂, θ₃, and θ₄ are 55.2 degrees, 24.6 degrees, 13.6 degrees, and 27.6 degrees, respectively, and the expression (2) is 1.45 and the illumination light is expanded.

A light amount of the illumination light in the first optical path may be approximately equal to that in the second optical path. By making the light amounts of the illumination light approximately equal to each other, the distance measurement accuracy does not change for each illumination range and highly reliable measurement can be performed. Calibration for each illumination range is not required. In this embodiment, the transmittances of the passage areas 2121 and 2122 and the reflectance of the reflective areas 2123 are 100%, respectively, but the areas, the positions, transmittances, or reflectances of the passage areas 2121 and 2122 may be fine-adjusted so that their light amounts can be equal in other cases as well.

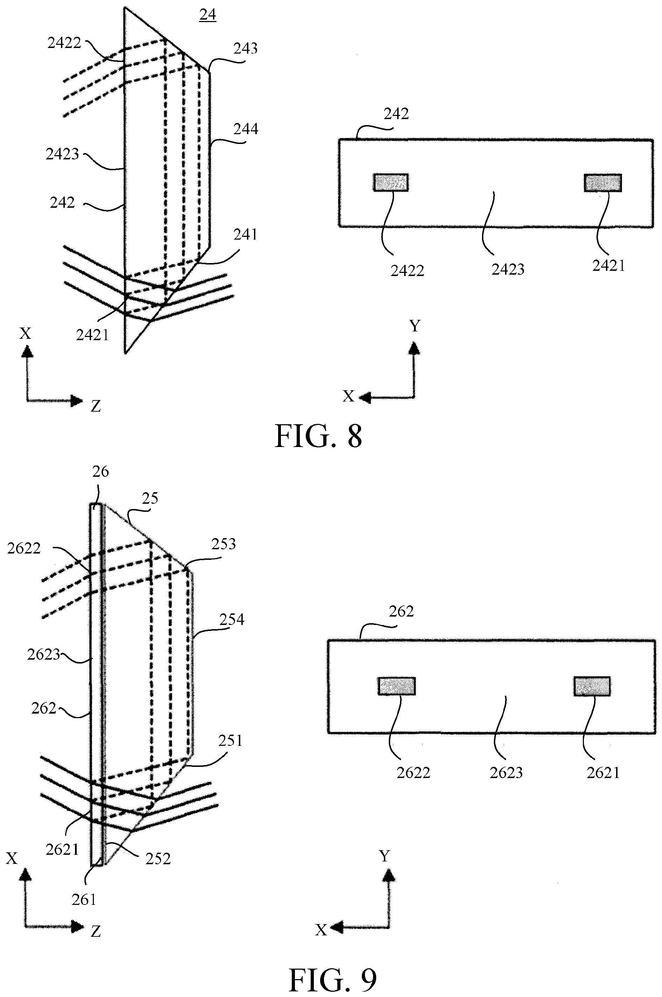

FIG. 8 is a schematic diagram of the principal part of the branching optical element 24 according to a variation of the branching optical element 21. The branching optical element 24 has the same external shape as that of the branching optical element 21. FIG. 8(a) illustrates the path of the illumination light passing through the branching optical element 24. FIG. 8B is a view of the second surface 242 viewed from the plane normal direction.

The second surface 242 has passage areas 2421 and 2422 for transmitting the illumination light, and a reflective area 2423 for reflecting the reflected light from the object OBJ. This variation illustrates a means for branching the light from the first surface by dividing the light intensity.

For example, in this variation, the passage area 2421 has characteristics with a transmittance of 50% and a reflectance of 50%, and the passage area 2422 has characteristics of a transmittance of 99% and a reflectance of 1%. In this variation, these characteristics are set in order to make the light amounts of the first optical path and the second optical path approximately equal to each other, but the present invention is not limited to these characteristics.

The light incident from the first surface 241 reaches the passage area 2421 of the second surface 242. At this time, due to the characteristics of the passage area 2421, 50% of the intensity of the light beam transmits while 50% is reflected. The transmitting light forms the first optical path as in FIG. 2. The reflected light is totally reflected on the first surface 241 and further totally reflected on the third surface 243, and is emitted from the passage area 2422 and forms the second optical path. Thereafter, both the first optical path and the second optical path enter the drive mirror 31.

On the other hand, the reflected light from the drive mirror 31 is reflected on the passage areas 2421 and 2422 and the reflective area 2423, enters and is received by the light receiving element corresponding to each surface.

FIG. 9 is a schematic diagram of the principal parts of the branching optical elements 25 and 26 according to a variation of the branching optical element 21. The branching optical element 25 has the same external shape as that of the branching optical element 21. FIG. 9(a) illustrates the path of the illumination light passing through the branching optical elements 25 and 26. FIG. 9(b) is a view of the second surface 262 viewed from the plane normal direction.

The branching optical element 26 is a flat plate, and the second surface 262 has passage areas 2621 and 2622 for transmitting the illumination light, and a reflective area 2623 for reflecting the reflected light from the object OBJ. This variation illustrates a means for branching light from the first surface utilizing polarization.

In this variation, the passage area 2621 is a polarization beam splitter surface having characteristics of a transmittance of 100% and a reflectance of 0% in a first polarization direction and a transmittance of 0% and a reflectance of 100% in a second polarization direction, and the passage area 2622 has characteristics of a transmittance of 99% and a reflectance of 1%. In this variation, the above characteristics are set in order to make the light amounts of the first optical path and the second optical path approximately equal to each other, but the present invention is not limited to these characteristics.

The light incident from the first surface 251 of the branching optical element 25 may be circularly polarized or unpolarized. In particular, in a case where a semiconductor laser is used for the light source 11, the polarization characteristic of the laser beam is linear polarization, so it is desirable to convert it into circular polarization using a quarter waveplate before it reaches the branching optical element 25.

The light incident from the first surface 251 of the branching optical element 25 passes through the second surface 252 and the first surface 261 of the branching optical element 26, and then reaches the passage area 2621. At this time, due to the polarization characteristics of the passage area 2621, the light in the first polarization direction (first polarized light component) transmits and the light in the second polarization direction (second polarized light component) is reflected. The transmitting light forms the first optical path as in FIG. 2. The reflected light is totally reflected by the first surface 251 of the branching optical element 25, further totally reflected by the third surface 253, and emitted from the passage area 2622 to form the second optical path. Thereafter, both the first optical path and the second optical path enter the drive mirror 31.

On the other hand, the reflected light from the drive mirror 31 is reflected on the passage areas 2621 and 2622 and the reflective area 2623, introduced to and received by the light receiving element corresponding to each surface.

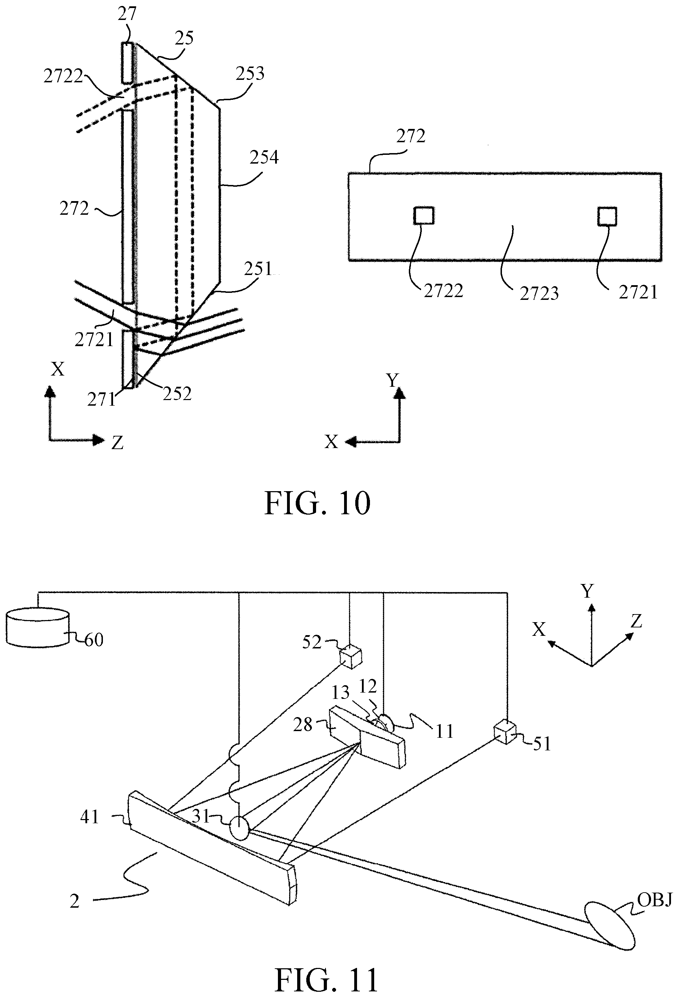

FIG. 10 is a schematic diagram of the principal part of the branching optical elements 25 and 27 according to a variation of the branching optical element 21. The branching optical element 25 has the same external shape as that of the branching optical element 21. FIG. 10(a) illustrates the path of the illumination light passing through the branching optical elements 25 and 27. FIG. 10(b) is a view of the second surface 272 viewed from the plane normal direction.

The branching optical element 27 is a flat plate, and has passage areas 2721 and 2722, which are holes through which the illumination light passes, a reflective area 271 for reflecting the illumination light from the light source 11, and a reflective area 272 for reflecting the reflected light from the object OBJ.

The light incident from the first surface 251 of the branching optical element 25 passes through the second surface 252 and then reaches the first surface 271 of the branching optical element 27. Of the illuminating light that has reached it, the light that has entered the passage area 2721 passes through the branching optical element 27 as it is, and this optical path will be referred to as a first optical path. On the other hand, the illumination light that has reached the second surface 272 is reflected, totally reflected by the first surface 251 of the branching optical element 25, further totally reflected by the third surface 253, and emitted from the passage area 2722, and forms the second optical path. Thereafter, both the first optical path and the second optical path enter the drive mirror 31.

On the other hand, the reflected light from the drive mirror 31 is reflected on the reflective area 272, introduced to and received by the light receiving element corresponding to each surface.

As described above, the configuration according to this embodiment is small but can expand the scanning range.

### SECOND EMBODIMENT

FIG. 11 is a schematic view of the principal part of an optical apparatus 2 according to this embodiment. The optical apparatus 2 includes the light source 11, the collimator lens 12, the diaphragm 13, a branching optical element 28, the drive mirror (deflection unit) 31, the condenser mirror 41, the light receiving elements (light receiving units) 51 and 52, and the control unit 60. The configuration except for the branching optical element 28 is the same as that of the first embodiment, and a description thereof will be omitted.

The branching optical element 28 has a function of branching the illumination optical path and separating the illumination optical path and the light receiving optical path.

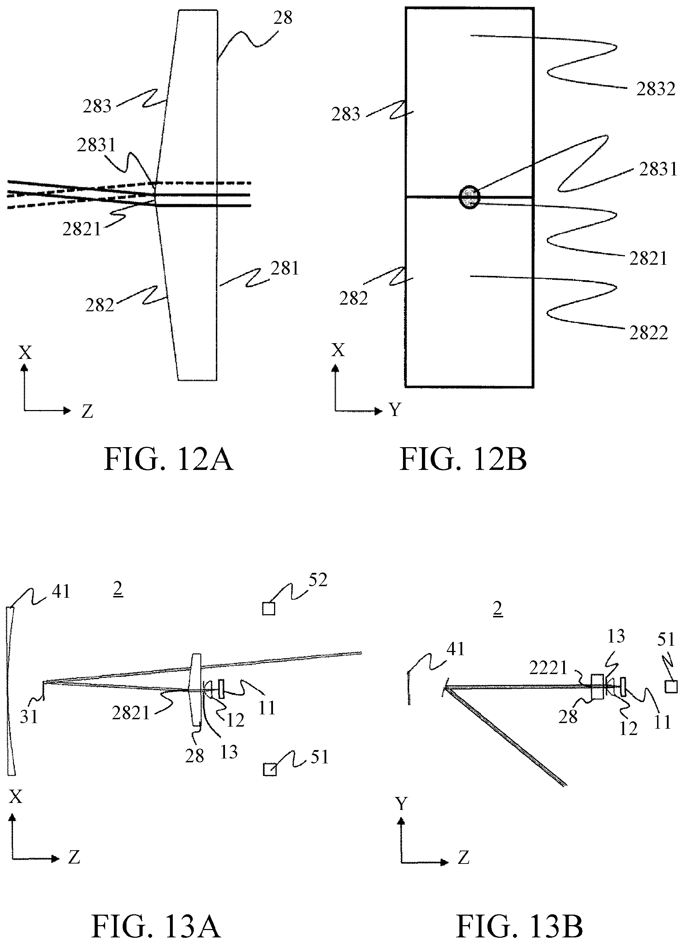

FIG. 12 is a schematic view of the principal part of the branching optical element 28 according to this embodiment. The branching optical element 28 has a first surface 281, a second surface 282, and a third surface 283. An angle formed between the first surface 281 and the second surface 282 and an angle formed between the first surface 281 and the third surface 283 are both 7.3 degrees around the Y-axis. FIG. 12(a) illustrates the path of the illumination light as it passes through the branching optical element 28. FIG. 12(b) is a view of the branching optical element 28 viewed from the -Z-axis direction.

The second surface 282 has a passage area 2821 for transmitting the illumination light and a reflective area 2822 for reflecting the reflected light from the object OBJ. The third surface 283 has a passage area 2831 for transmitting the illumination light and a reflective area 2832 for reflecting the reflected light from the object OBJ. The passage areas 2821 and 2831 have semicircular shapes with a radius of 1.6 mm in this embodiment, but the present invention is not limited to this example. For example, it may be rectangular. In this embodiment, the areas of the passage areas 2821 and 2831 are equal to each other so that the light amounts of the illumination lights in the first optical path and the second optical path, which will be described later, are approximately equal. Antireflection films may be formed on the passage areas 2821 and 2831. A layer that reflects incident light from the outside of the branching optical element 28 is formed on each of the reflective areas 2822 and 2832 by a metal film, a dielectric film, or the like. A layer for absorbing light may be formed on a non-effective area where the incident light of the reflective areas 2822 and 2832 does not reach.

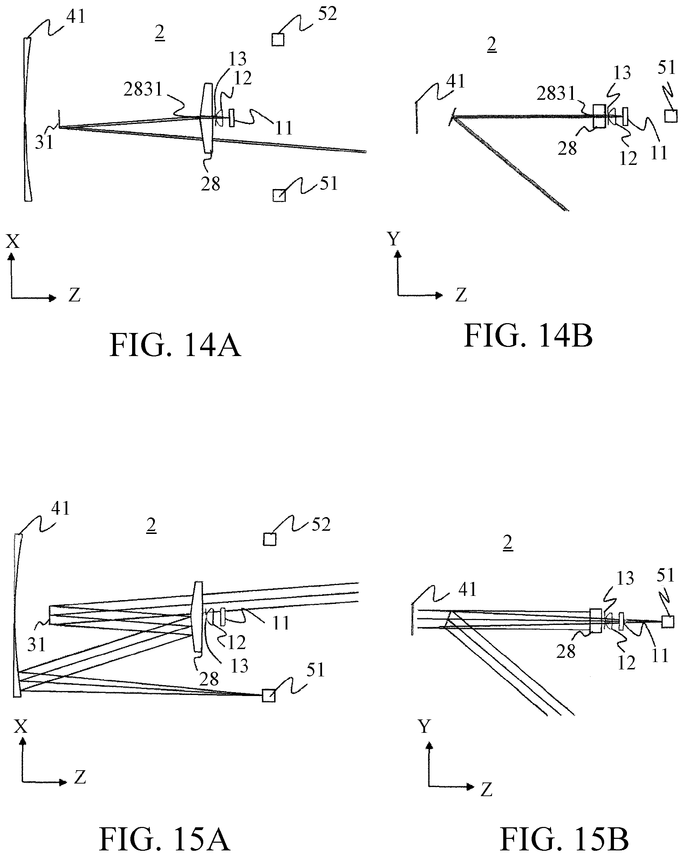

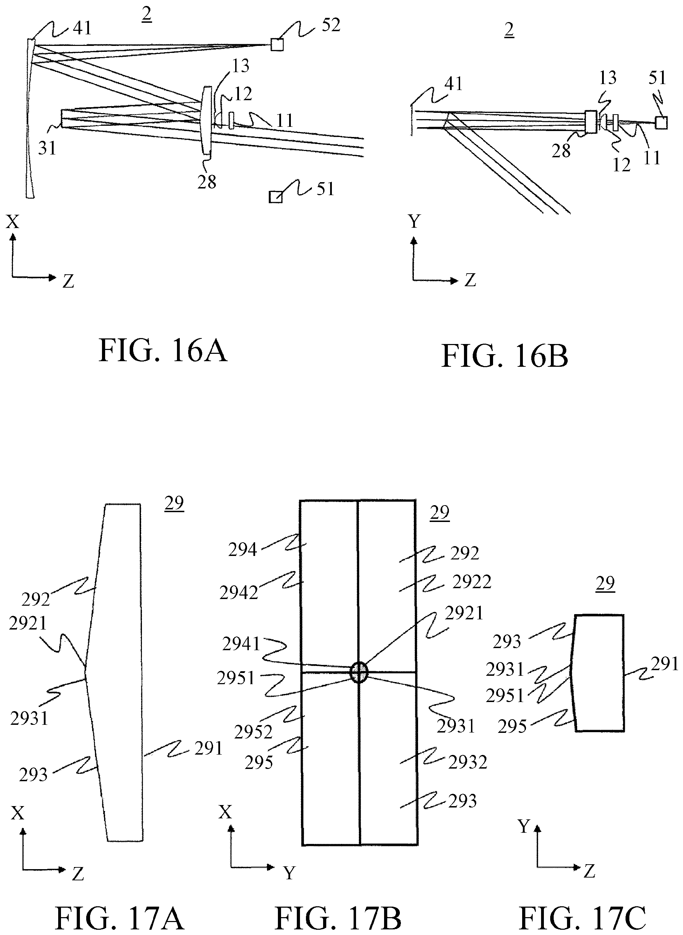

FIG. 13 is an optical path diagram of the illumination light transmitting through the passage area (first passage area) 2821. FIG. 14 is an optical path diagram of the illumination light transmitting through the passage area (second passage area) 2831. FIG. 15 is an optical path diagram of the reflected light from the object OBJ illuminated by the illumination light transmitting through the passage area 2821. FIG. 16 is an optical path diagram of the reflected light from the object OBJ illuminated by the illumination light transmitting through the passage area 2831. In each figure, (a) is an XZ sectional view, and (b) is a YZ sectional view.

The light that has passed through the diaphragm 13 is refracted on the first surface 281 according to Snell's law, travels in the branching optical element 28, and reaches the second surface 282 and the third surface 283. The illumination light that has reached the second surface 212 is emitted from the passage area 2821 and enters the drive mirror 31. Hereinafter, this optical path will be referred to as a first optical path (solid line in FIG. 12(a)). On the other hand, the illumination light that has reached the third surface 283 is emitted from the passage area 2831 and enters the drive mirror 31. Hereinafter, this optical path will be referred to as a second optical path (broken line in FIG. 12(a)). In this way, the illumination light is branched into two illumination lights (first illumination light and second illumination light) by the branching optical element 28, and the first and second illumination lights are emitted from the passage areas 2821 and 2831 so that their emission directions form an angle.

The illumination light of the first optical path and the illumination light of the second optical path are reflected by the drive mirror 31, pass under the branching optical element 28 and the light source 11, and then illuminate the object OBJ while being two-dimensionally scanned. Two lights emitted from the branching optical element 28 enter the drive mirror 31 at different angles and are scanned to illuminate different areas. That is, the illumination range can be expanded.

The reflected light from the object OBJ is deflected to the branching optical element 28 by the drive mirror 31. More specifically, the reflected light in the first optical path passes under the light source 11 and the branching optical element 28 in the optical path in the direction opposite to the illumination light, then enters the drive mirror 31 and is deflected toward the second surface 282. Of the deflected light, the light that has reached the reflective area 2822 is reflected toward the condenser mirror 41, condensed on and received by the light receiving element 51. The reflected light in the second optical path passes under the light source 11 and the branching optical element 28 in an optical path opposite to the illumination light, then enters the drive mirror 31 and is deflected toward the third surface 283. Of the deflected light, the light that has reached the reflective area 2832 is reflected toward the condenser mirror 41, condensed on and received by the light receiving element 52.

The light emitted from the passage area 2821 and the light emitted from the passage area 2831 have angles with the same absolute value but different signs. As a result, the angles incident on the drive mirror 31 have the same absolute value but the directions are opposite to each other, so that the areas of the respective illumination ranges are equal to each other and the object OBJ can be illuminated symmetrically with respect to the Y-axis.

The illumination light in the first optical path and the illumination light in the second optical path may intersect each other before they enter the drive mirror 31. Intersected illumination lights in the first optical path and the second optical path can suppress the width of each illumination light in the first optical path and the second optical path incident on the drive mirror 31, and prevent the diameter of the drive mirror 31 from increasing.

FIG. 17 is a schematic diagram of the principal part of the branching optical element 29 according to a variation of the branching optical element 28. The branching optical element 29 has a first surface 291 and a second surface 292, a third surface 293, a fourth surface 294, and a fifth surface 295. FIG. 17(a) is a view of the branching optical element 29 viewed from the +Y-axis direction. FIG. 17(b) is a view of the branching optical element 29 viewed from the -Z-axis direction. FIG. 17(c) is a view of the branching optical element 29 viewed from the -X-axis direction.

The branching optical element 28 has two surfaces or a reflective area and a passage area, while the branching optical element 29 has four surfaces. More specifically, the second surface 292 has a passage area 2921 for transmitting the illumination light and a reflective area 2922 for reflecting the reflected light from the object OBJ. The third surface 293 is a passage area 2931 for transmitting illumination light, and a reflective area 2932 for reflecting the reflected light from the object OBJ. The fourth surface 294 has a passage area 2941 for transmitting the illumination light and a reflective area 2942 for reflecting the reflected light from the object OBJ. The fifth surface 295 has a passage area 2951 for transmitting the illumination light and a reflective area 2952 for reflecting the reflected light from the object OBJ. All of the second surface 292, the third surface 293, the fourth surface 294, and the fifth surface 295 are surfaces rotated around the X-axis and the Y-axis.

The illumination light transmitting through the first surface 231 passes through the passage areas 2921, 2931, 2941, and 2951 and enters the drive mirror 31. On the other hand, the reflected light from the drive mirror 31 is reflected in the reflective areas 2922, 2932, 2942, and 2952, introduced to and received by the light receiving element (not illustrated) corresponding to each surface.

As described above, the configuration according to this embodiment is small but can expand the scanning range.

### THIRD EMBODIMENT

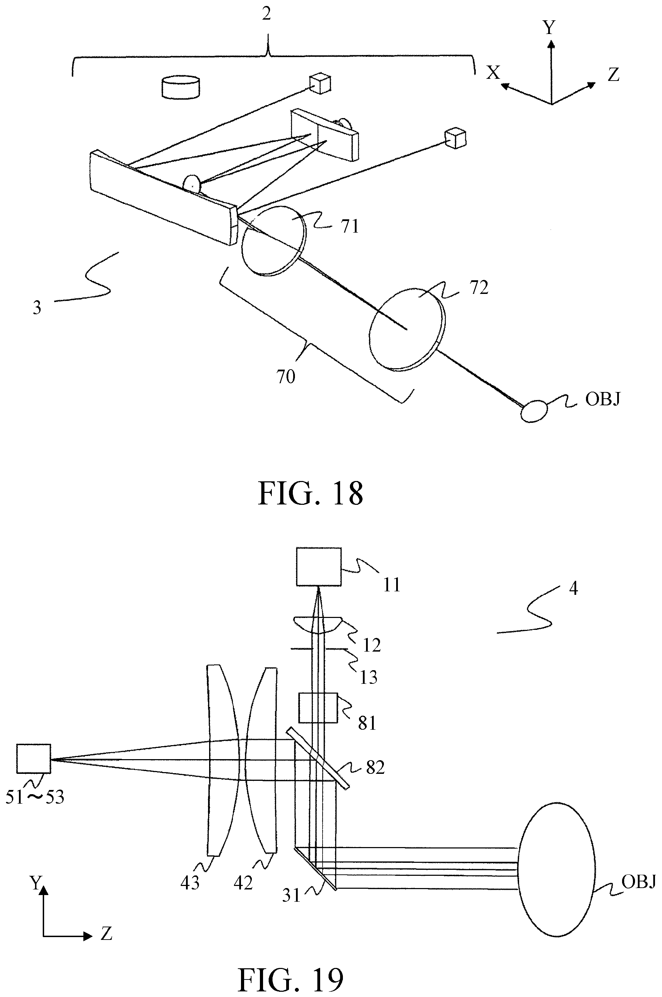

FIG. 18 is a schematic view of the principal part of an optical apparatus 3 according to this embodiment. The optical apparatus 3 includes the optical apparatus 2 according to the second embodiment and a telescope 70. The configuration except for the telescope 70 is the same as that of the second embodiment, and a description thereof will be omitted.

The telescope 70 is an optical system (afocal system) that includes a plurality of optical elements (lenses) having a refractive power (power) and does not have a refractive power in the whole system. In this embodiment, the telescope 70 includes lenses 71 and 72 having positive powers. The telescope 70 is disposed on the illumination side of the drive mirror 31. The drive mirror 31 is disposed at a position (entrance pupil position) that is optically an entrance pupil of the telescope 70. An optical magnification β of the telescope 70 is larger than 1 relative to the exit pupil from the drive mirror 31 side (|β|>1).

The illumination light emitted from the light source 11 reaches the drive mirror 31 in the same optical path as that in the second embodiment, is reflected by the drive mirror 31, and enters the telescope 70. The illumination light that has entered the telescope 70 is magnified according to the optical magnification β and illuminates the object OBJ. The reflected light from the illuminated object OBJ enters the telescope 70, is reduced according to the optical magnification 1/β, and reaches the drive mirror 31. The optical path after the drive mirror 31 is the same as that of the second embodiment.

The telescope 70 thus disposed can expand the light beam diameter of the illumination light and reduce the divergence angle of the illumination light. As a result, the spread of the illumination light at a distant place can be suppressed, and the resolution and the illuminance at the distant place can be improved. Moreover, the pupil diameter where the telescope 70 is disposed is larger than that where the telescope 70 is not disposed, and a larger amount of reflected light from the object OBJ can be taken in, so that the measured distance and the distance measuring accuracy can be performed.

### FOURTH EMBODIMENT

FIG. 19 is a schematic view of the principal part of an optical apparatus 4 according to this embodiment. The optical apparatus 4 includes the light source 11, the collimator lens 12, the diaphragm 13, branching optical elements 81 and 82, the drive mirror (deflection unit) 31, condenser lenses 42 and 43, light receiving elements (light receiving units) 51 to 53, and the control unit 60 (not shown). The configuration except for the branching optical elements 81 and 82 is the same as that of the first embodiment, and a description thereof will be omitted.

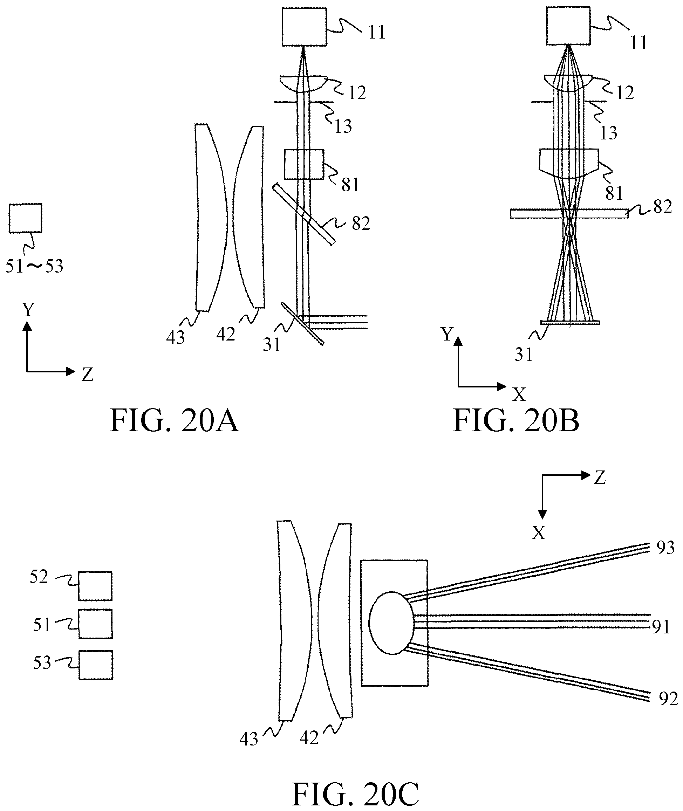

A coordinate system according to this embodiment is defined as illustrated in FIG. 19. More specifically, one swing direction of the drive mirror 31 is set to an X-axis, a direction in which light travels from the light source 11 to the drive mirror 31 is set to a Y-axis, and a direction orthogonal to the X-axis and the Y-axis is set to a Z-axis. FIG. 20 is an optical path diagram of the illumination light according to this embodiment. FIG. 20(a) is a YZ sectional view, FIG. 20(b) is an XY sectional view, and FIG. 20(c) is a bottom view viewed from a -Y-axis direction.

The branching optical element 81 has a function of branching the illumination optical path, and the branching optical element 82 has a function of separating the illumination optical path and the light receiving optical path.

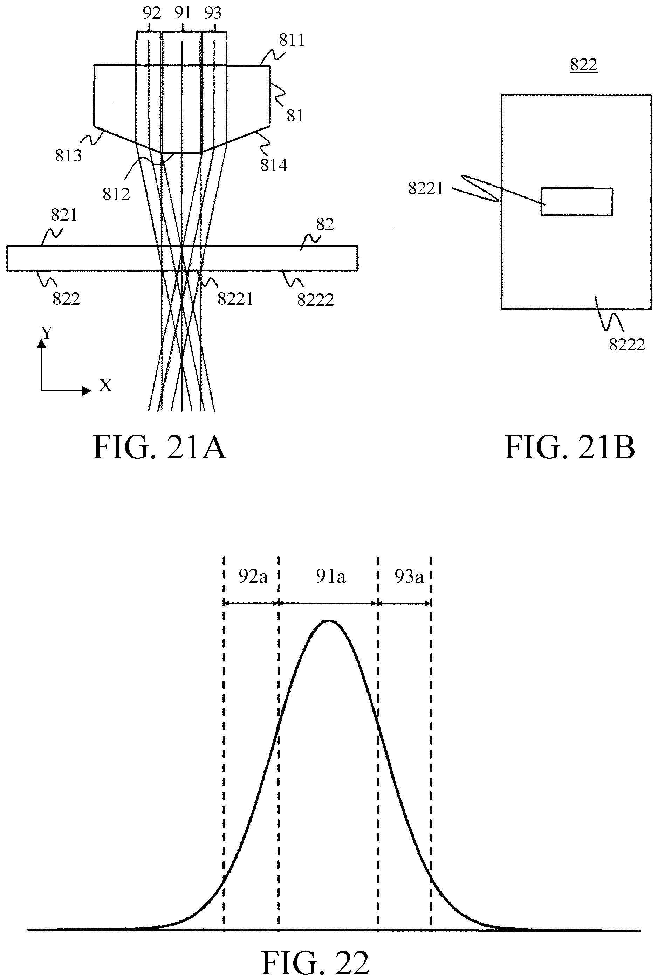

FIG. 21 is a schematic diagram of the principal parts of the branching optical elements 81 and 82 according to this embodiment. FIG. 21(a) illustrates the configurations of the branching optical elements 81 and 82 and the illumination optical path passing through the branching optical elements 81 and 82. The branching optical element 81 has a first surface 811, a second surface 812, a third surface 813, and a fourth surface 814. An angle formed between the second surface 812 and the third surface 813 and an angle formed between the second surface 812 and the fourth surface 814 are 21.4 degrees with the same absolute value and different signs around the Z-axis.

In a case where the above semiconductor laser is used for the light source 11, as illustrated in FIG. 22, the light amount distribution of the illumination light has an approximately Gaussian distribution. The illumination light travels from the first surface 811 into the branching optical element 81 after its periphery is shielded by the diaphragm 13. The light beam near the center of the illumination light passes through the second surface 812. This optical path will be referred to as a first optical path 91. The light beam passing through the first optical path 91 has a light amount distribution 91a illustrated in FIG. 22. A part of the light beam near the periphery of the illumination light passes through the third surface 813. This optical path will be referred to as a second optical path 92. The light beam passing through the second optical path 92 has a light amount distribution 92a illustrated in FIG. 22. The other part of the light beam near the periphery of the illumination light passes through the fourth surface 814. This optical path will be referred to as a third optical path 93. The light beam passing through the third optical path 93 has a light amount distribution 93a illustrated in FIG. 22. In this embodiment, the light amount of light beam passing through the first optical path 91 is larger than that of the light beam passing through the second optical path 92 and that of the light beam passing through the third optical path 93. Since the third surface 813 and the fourth surface 814 have an angle relative to the second surface 812, the second optical path 92 and the third optical path 93 have angles of 12.0 degrees with the same absolute value and different signs relative to the first optical path 91.

The branching optical element 82 has a first surface 821 and a second surface 822. FIG. 21(b) is a view of the branching optical element 82 viewed from the plane normal direction of the second surface 822. The second surface 822 has a passage area 8221 for transmitting the illumination light and a reflective area 8222 for reflecting the reflected light from the object OBJ. The passage area 8221 has a rectangular shape of 2.5×6.6 mm in this embodiment, but the present invention is not limited to this example. For example, it may have an elliptical shape. An antireflection film may be formed on the passage area 8221. A layer for reflecting incident light from the outside of the branching optical element 82 may be formed on the reflective area 8222 by a metal film, a dielectric film, or the like. A layer for absorbing light may be formed on a non-effective area where the incident light of the reflective area 8222 does not reach.

Each light beam emitted from the branching optical element 81 enters the first surface 821 of the branching optical element 82 and is emitted from the passage area 8221 of the second surface 822. Since the branched light beam passes through the same passage area, assembly adjustment can be easy.

The light beams emitted from the branching optical element 82 and passing through the first to third optical paths 91 to 93 are reflected by the drive mirror 31 and two-dimensionally scanned, and illuminate the object OBJ. Three light beams emitted from the branching optical element 81 enter the drive mirror 31 at different angles and are scanned to illuminate different areas. That is, the illumination range can be expanded.

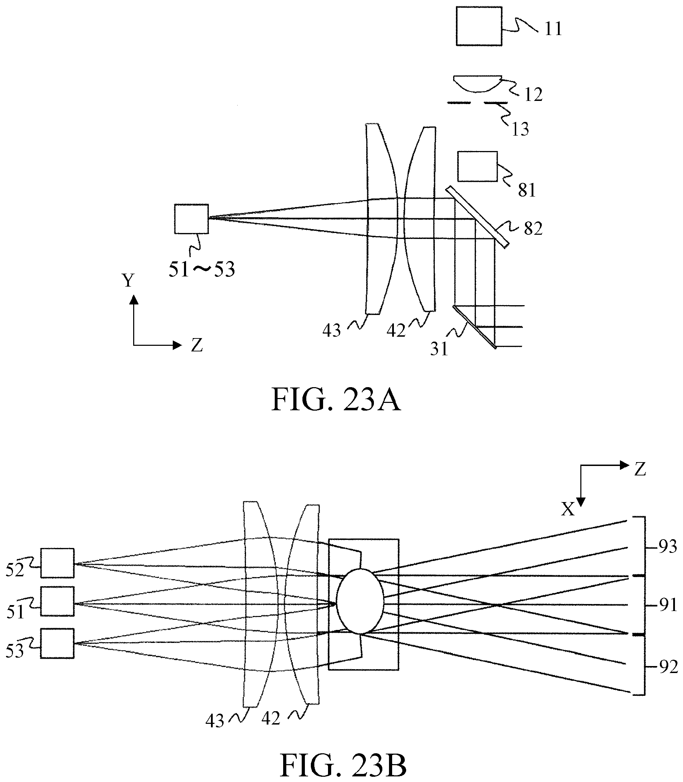

FIG. 23 is an optical path diagram of the reflected light according to this embodiment. FIG. 23(a) is a YZ sectional view, and FIG. 23(b) is a bottom view viewed from the -Y direction. The reflected light in each optical path from the object OBJ is deflected to the branching optical element 82 by the drive mirror 31. Of the deflected light, the light that has reached the reflective area 8222 is reflected toward the condenser lens 42 and passes through the condenser lens 43. The light beam passing through the first optical path 91 is condensed on and received by the light receiving element 51, the light beam passing through the second optical path 92 is condensed on and received by the light receiving element 52, and the light beam passing through the third optical path 93 is condensed on and received by the light receiving element 53. That is, in this embodiment, each light beam reflected by the branching optical element 82 passes through the same lens and is condensed on the light receiving element. This embodiment uses the condenser lens, and thus can reduce the size of the entire apparatus unlike the mirror. The distance between the light receiving elements can be narrowed, and each light receiving element can be disposed on the same substrate or an array of light receiving elements can be used.

The entrance pupil of the condensing optical system (common optical system) including the condenser lenses 42 and 43 may be located above the drive mirror 31. Thereby, the principal ray of each reflected light beam can approximately vertically enter the light receiving element. Generally, the closer to vertical incidence the angle is, the higher sensitivity the light receiving element has, so that the detecting distance can be extended in a case where the entire light beams enter the light receiving element at small angles.

As described above, since a light amount of the light beam passing through the first optical path 91 is larger than a light amount of the light beam passing through the second optical path 92 and a light amount of the light beam of the light beam passing through the third optical path 93, a reflected light amount can be increased and consequently the measurable distance can be increased. In this embodiment, a wide-angle scheme can be realized by branching the illumination light into three while the distance is measured farther with a light beam passing a position near the center of the angle of view.

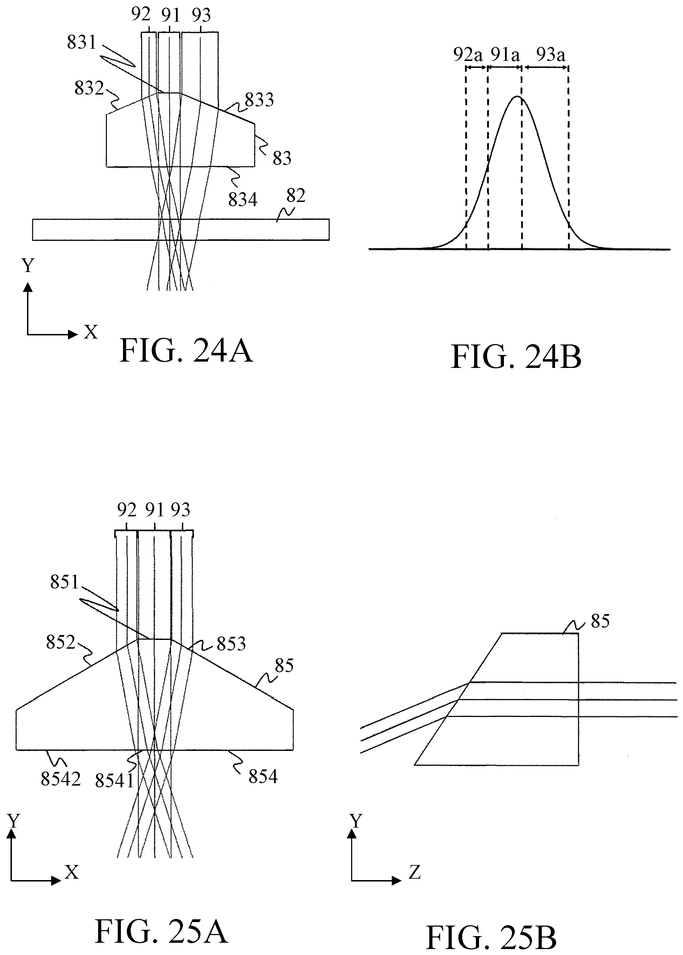

FIG. 24(a) is a schematic diagram of the principal part of the branching optical element 83 according to a variation of the branching optical element 81, and FIG. 24(b) is a diagram showing a light amount distribution of the illumination light passing through the branching optical element 83. The branching optical element 83 has a first surface 831, a second surface 832, a third surface 833, and a fourth surface 834. An angle formed between the first surface 831 and the second surface 832, and an angle formed between the first surface 831 and the third surface 833 are 22.8 degrees with the same absolute value and different signs around the Z-axis.

The illumination light travels in the branching optical element 83 after its periphery is shielded by the diaphragm 13. The light beam near the center of the illumination light passes through the first surface 831. This optical path will be referred to as a first optical path 91. The light beam passing through the first optical path 91 has a light amount distribution 91a illustrated in FIG. 24 (b). Part of the light beam near the periphery of the illumination light passes through the second surface 832. This optical path will be referred to as a second optical path 92. The light beam passing through the second optical path 92 has a light amount distribution 92a illustrated in FIG. 24(b). The other part of the light beam near the periphery of the illumination light passes through the third surface 833. This optical path will be referred to as a third optical path 93. The light beam passing through the third optical path 93 has a light amount distribution 93a illustrated in FIG. 24(b). This embodiment makes light amounts larger in order of the light amount of the light beam passing through the third optical path 93, the light amount of the light beam passing through the first optical path 91, and the light amount of the light beam passing through the second optical path 92. Since the second surface 832 and the third surface 833 form an angle relative to the first surface 831, the second optical path 92 and the third optical path 93 have angles with the same absolute value and different signs relative to the first optical path 91. The light beams passing through the first optical path 91 to the third optical path 93 are emitted from the fourth surface 834 and enter the branching optical element 82, respectively.

FIG. 25 is a schematic diagram of the principal part of the branching optical element 85 according to a variation of the branching optical elements 81 and 82. FIG. 25(a) is an XY sectional view, and FIG. 25(b) is a YZ sectional view. The branching optical element 85 has a first surface 851, a second surface 852, a third surface 853, and a fourth surface 854. An angle formed between the first surface 851 and the second surface 852 and an angle formed between the first surface 852 and the third surface 853 are 30.0 degrees with the same absolute value and different signs around the Z-axis. An angle formed between the first surface 851 and the fourth surface 854 is 33.5 degrees around the X-axis.

The fourth surface 854 has a passage area 8541 for transmitting the illumination light and a reflective area 8542 for reflecting the reflected light from the object OBJ.

The illumination light travels in the branching optical element 85 after its periphery is shielded by the diaphragm 13. The light beam near the center of the illumination light passes through the first surface 851. This optical path will be referred to as a first optical path 91. Part of the light beam near the periphery of the illumination light passes through the second surface 852. This optical path will be referred to as a second optical path 92. The other part of the light beam near the periphery of the illumination light passes through the third surface 853. This optical path will be referred to as a third optical path 93. In this embodiment, the light amount of light beam passing through the first optical path 91 is larger than the light amount of light beam passing through the second optical path 92 and the light amount of light beam passing through the third optical path 93. Since the second surface 852 and the third surface 853 have angles relative to the first surface 851, the second optical path 92 and the third optical path 93 have angles with the same absolute value and different signs relative to the first optical path 91. The light beams passing through the first optical path 91 to the third optical path 93 are emitted from the passage area 8541 of the fourth surface 854, respectively. In this embodiment, as illustrated in FIG. 25(b), since the illumination light is emitted downward from the passage area 8541, the deflection mirror 31 is also disposed downward.

On the other hand, the reflected light from the object OBJ is deflected to the branching optical element 85 by the drive mirror 31. Of the deflected light, the light that has reached the reflective area 8542 is reflected toward the condenser lens 42.

In this variation, the two branching optical elements are integrated with each other and thus the cost can be reduced by reducing the number of components and the number of assembling steps.

In this embodiment, a light amount of the illumination light from the light source follows a Gaussian distribution, but the present invention is not limited to this light amount distribution and may be a uniform or annular distribution.

### [IN-VEHICLE SYSTEM]

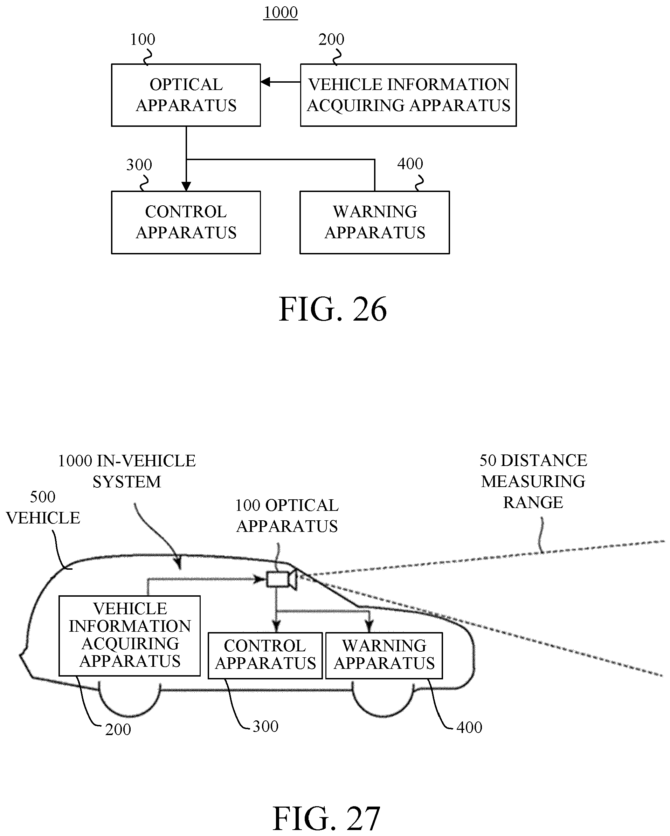

FIG. 26 is a configuration diagram of an optical apparatus 100, which is one of the optical apparatuses according to respective embodiments, and an in-vehicle system (driving support apparatus) 1000 having the same. The in-vehicle system 1000 is an apparatus held by a movable moving body (moving apparatus) such as an automobile (vehicle), and configured to support driving (steering) of the vehicle based on distance information on an object such as an obstacle or a pedestrian around the vehicle acquired by the optical apparatus 100. FIG. 27 is a schematic diagram of a vehicle 500 including the in-vehicle system 1000. FIG. 27 illustrates a case where the distance measurement range (detection range) of the optical apparatus 100 is set to the front of the vehicle 500, but the distance measurement range may be set to the rear or side of the vehicle 500.

As illustrated in FIG. 26, the in-vehicle system 1000 includes the optical apparatus 100, a vehicle information acquiring apparatus 200, a control apparatus (ECU: electronic control unit) 300, and a warning apparatus (warning unit) 400. In the in-vehicle system 1000, the control unit 60 included in the optical apparatus 100 has functions of a distance acquiring unit (acquiring unit) and a collision determining unit (determining unit). However, if necessary, the in-vehicle system 1000 may include a distance acquiring unit and a collision determining unit separate from the control unit 60, or each may be provided outside of the optical apparatus 100 (for example, inside the vehicle 500). Alternatively, the control apparatus 300 may be used as the control unit 60.

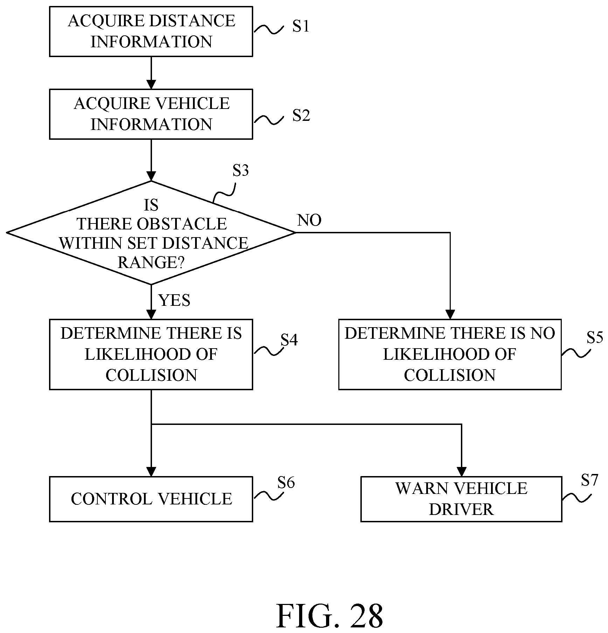

FIG. 28 is a flowchart showing an operation example of the in-vehicle system 1000 according to this embodiment. A description will now be given of the operation of the in-vehicle system 1000 with reference to this flowchart.

First, in step S1, the light source unit of the optical apparatus 100 illuminates the object around the vehicle, and the control unit 60 acquires the distance information on the object based on the signal output from the light receiving element by receiving the reflected light from the object. In step S2, the vehicle information acquiring apparatus 200 acquires vehicle information including the speed, yaw rate, steering angle of the vehicle, and the like. Then, in step S3, the control unit 60 determines whether the distance to the object is included within a preset distance range using the distance information acquired in step S1 and the vehicle information acquired in step S2.

This configuration can determine whether or not the object exists within the set distance range around the vehicle, and determine a likelihood of collision between the vehicle and the object. Steps S1 and S2 may be performed in the reverse order of the above order or in parallel with each other. The control unit 60 determines that "there is the likelihood of collision" in a case where the object exists within the set distance (step S4) and determines "there is no likelihood of collision" in a case where the object does not exist within the set distance (step S5).

Next, in the case where the control unit 60 determines that "there is a likelihood of collision," the control unit 60 notifies (transmits) the determination result to the control apparatus 300 and the warning apparatus 400. At this time, the control apparatus 300 controls the vehicle based on the determination result of the control unit 60 (step S6), and the warning apparatus 400 warns the user (driver) of the vehicle based on the determination result of the control unit 60 (step S7). The determination result may be notified to at least one of the control apparatus 300 and the warning apparatus 400.

The control apparatus 300 can control the movement of the vehicle by outputting a control signal to a driving unit (engine, motor, etc.) of the vehicle. For example, in the vehicle, control can be made such as applying a brake, releasing an accelerator, turning a steering wheel, generating a control signal for generating a braking force on each wheel, and suppressing the output of the engine or motor. The warning apparatus 400 warns the vehicle driver, for example, by issuing a warning sound, displaying warning information on the screen of a car navigation system, or vibrating a seat belt or steering.

Thus, the in-vehicle system 1000 according to this embodiment can detect the object and measure the distance by the above processing, and avoid the collision between the vehicle and the object. In particular, applying the optical apparatus according to each of the embodiments to the in-vehicle system 1000 can realize high distance measuring accuracy, so that object detection and collision determination can be performed with high accuracy.

This embodiment applies the in-vehicle system 1000 to the driving support (collision damage mitigation), but the in-vehicle system 1000 is not limited to this example and is applicable to cruise control (including adaptive cruise control) and automatic driving. The in-vehicle system 1000 is applicable not only to a vehicle such as an automobile but also to a moving body such as a ship, an aircraft, or an industrial robot. It can be applied not only to moving objects but also to various devices that utilize object recognition such as intelligent transportation systems (ITS) and monitoring systems.

The in-vehicle system 1000 and the moving apparatus may include a notification apparatus (notifying unit) for notifying the manufacturer of the in-vehicle system, the seller (dealer) of the moving apparatus, or the like of any collisions between the vehicle 700 and the obstacle. For example, the notification apparatus may use an apparatus that transmits information (collision information) on the collision between the vehicle 700 and the obstacle to a preset external notification destination by e-mail or the like.

Thus, the configuration for automatically notifying the collision information through the notification apparatus can promote processing such as inspection and repair after the collision. The notification destination of the collision information may be an insurance company, a medical institution, the police, or another arbitrary destination set by the user. The notification apparatus may notify the notification destination of not only the collision information but also the failure information on each component and consumption information on consumables. The presence or absence of the collision may be detected based on the distance information acquired by the output from the above light receiving unit or by another detector (sensor).

## Claims

1. An optical apparatus comprising:
a deflection unit (31) configured to deflect illumination light from a light source (11) to scan an object (OBJ), and to deflect reflected light from the object (OBJ); and
a light guide unit (21) configured to guide the illumination light to the deflection unit (31), and to guide the reflected light from the deflection unit (31) to a light receiving unit (51, 52),
wherein the light guide unit (21) includes a first passage area (2121) and a second passage area (2122) through which the illumination light passes, and
wherein the illumination light is branched into first illumination light and second illumination light by the light guide unit,
**characterized in that**
the light guide unit (21) includes a reflective area (2123) for reflecting the reflected light,
the light guide unit (21) includes a first surface (211) which the illumination light enters, a second surface (212) having the first and second passage areas (2121, 2122) and the reflective area (2123), and a reflective surface (213) for reflecting the illumination light, wherein the first surface (211) and the second surface (212) have a first angle (α1) to each other, and the second surface (212) and the reflective surface (213) have a second angle (α2) to each other, wherein the second illumination light from the first surface (211) is reflected by the reflective surface (213), and emitted from the second passage area (2122), and
the first illumination light is emitted from the first passage area (2121) and the second illumination light is emitted from the second passage area (2122) so that an emission direction of the first illumination light and an emission direction of the second illumination light form an angle, and then the first illumination light and the second illumination light enter the deflection unit (31).

2. An optical apparatus comprising:
a deflection unit (31) configured to deflect illumination light from a light source (11) to scan an object (OBJ), and to deflect reflected light from the object (OBJ); and
a light guide unit (28) configured to guide the illumination light to the deflection unit (31), and to guide the reflected light from the deflection unit (31) to a light receiving unit (51, 52),
wherein the light guide unit (28) includes a first passage area (2821) and a second passage area (2831) through which the illumination light passes, and
wherein the illumination light is branched into first illumination light and second illumination light by the light guide unit (28),
**characterized in that**
the light guide unit (28) includes a reflective area (2822, 2832) for reflecting the reflected light,
the light guide unit (28) includes a first surface (281), a second surface (282) having the first passage area (2821) and the reflective area (2822, 2832), and a third surface (283) having the second passage area (2831) and the reflective area (2822, 2832), wherein the second surface (282) and the third surface (283) have a predetermined angle to each other, and
the first illumination light is emitted from the first passage area (2821) and the second illumination light is emitted from the second passage area (2831) so that an emission direction of the first illumination light and an emission direction of the second illumination light form an angle, and then the first illumination light and the second illumination light enter the deflection unit (31).

3. An optical apparatus comprising:
a deflection unit (31) configured to deflect illumination light from a light source (11) to scan an object (OBJ), and to deflect reflected light from the object (OBJ); and
a light guide unit (81, 82) configured to guide the illumination light to the deflection unit (31), and to guide the reflected light from the deflection unit (31) to a light receiving unit (51-53),
wherein the light guide unit (81, 82) includes a passage area (8221) through which the illumination light passes, and
wherein the illumination light is branched into first illumination light and second illumination light by the light guide unit (81, 82),
**characterized in that**
the light guide unit (81, 82) includes a reflective area (8222) for reflecting the reflected light,
the light guide unit (81, 82) comprises a first light guide unit (81) and a second light guide unit (82), wherein the first light guide unit (81) comprises a first surface (811) where the illumination light enters, a second surface (812), a third surface (813) and a fourth surface (814), wherein a predetermined angle is formed between the second surface (812) and the third surface (813), and between the second surface (812) and the fourth surface (814), wherein the illumination light passes through the third surface (813) and the fourth surface (814), to form the first illumination light and the second illumination light, and wherein the second light guide unit (82) comprises the reflective area (8222), and
the first illumination light and the second illumination light are emitted from the passage area (8221) so that an emission direction of the first illumination light and an emission direction of the second illumination light form an angle, and then the first illumination light and the second illumination light enter the deflection unit (31).

4. The optical apparatus according to any of claims 1 to 3, wherein the illumination light is branched by spatially dividing part of a light beam by the light guide unit (21, 28, 81, 82).

5. The optical apparatus according to any of claims 1 to 3, wherein the illumination light is branched by dividing a light intensity by the light guide unit (21, 28, 81, 82).

6. The optical apparatus according to any of claims 1 to 3, wherein the illumination light is branched by dividing the illumination light into a first polarization component and a second polarization component orthogonal to the first polarization component by the light guide unit (21, 28, 81, 82).

7. The optical apparatus according to any one of claims 1 to 6, wherein the first illumination light and the second illumination light have light amounts equal to each other.

8. The optical apparatus according to any one of claims 1 to 6, wherein the first illumination light and the second illumination light have light amounts different from each other.

9. The optical apparatus according to claim 1, wherein the optical apparatus satisfies the following expression, ${α}_{1} + {α}_{2} = 90$ where α₁ is the first angle, and α₂ is the second angle.

10. The optical apparatus according to any one of claims 1 to 9, wherein the light guide unit (21, 28, 81, 82) expands a light beam diameter of the illumination light.

11. The optical apparatus according to claim 1 or 2, wherein the first and second passage areas (2121, 2122, 2821, 2831) are common.

12. The optical apparatus according to claim 2, wherein the first illumination light and the second illumination light intersect each other before entering the deflection unit (31).

13. The optical apparatus according to any one of claims 1 to 12, wherein reflected light of the first illumination light and reflected light of the second illumination light pass through a common optical system (42, 43) after passing through the light guide unit (21, 28, 81, 82) and before entering the light receiving unit (51-53).

14. The optical apparatus according to claim 13, wherein an entrance pupil of the common optical system (41, 42) is located above the deflection unit (31).

15. The optical apparatus according to claim 13, wherein the common optical system (42, 43) includes a condenser mirror.

16. The optical apparatus according to any one of claims 1 to 15, further comprising a telescope (70) configured to increase a light beam diameter of the illumination light deflected by the deflection unit (31) and to reduce a light beam diameter of the reflected light from the object (OBJ).

17. The optical apparatus according to claim 16, wherein the deflection unit (31) is disposed at an entrance pupil position of the telescope (70).

18. The optical apparatus according to any one of claims 1 to 17, wherein an illumination range of the first illumination light and an illumination range of the second illumination light partially overlap each other.

19. The optical apparatus according to any one of claims 1 to 18, further comprising a control unit (60) configured to acquire distance information on the object (OBJ) based on an output from the light receiving unit (21, 28, 81, 82).

20. An in-vehicle system (1000) configured to support driving of a moving apparatus (500) and to be held by the moving apparatus (500), comprising the optical apparatus (100) according to any one of claims 1 to 19.

21. The in-vehicle system (1000) according to claim 20, further comprising a determining unit (300) configured to determine a likelihood of collision with the object (OBJ) based on distance information on the object (OBJ) acquired by the optical apparatus (100).

22. The in-vehicle system (1000) according to claim 21, further comprising a control apparatus (300) configured to output a control signal for generating a braking force in the moving apparatus (500) in a case where the determining unit (300) determines that there is the likelihood of collision with the object (OBJ).

23. The in-vehicle system (1000) according to claim 21 or 22, further comprising a warning apparatus (400) configured to warn a user of the moving body (500) in a case where the determining unit (300) determines that there is the likelihood of collision with the object (OBJ).

24. The in-vehicle system (1000) according to any one of claims 21 to 23, further comprising a notification apparatus configured to notify information on the collision with the object (OBJ) to outside.

25. A moving apparatus (500) comprising the optical apparatus (100) according to any one of claims 1 to 19, and configured to hold the optical apparatus (100) and to move.

26. The moving apparatus (500) according to claim 25, further comprising the in-vehicle system (1000) according to any of claims 20 to 24.

## Patentansprüche

1. Optische Vorrichtung mit:
einer Beugungseinheit (31), die konfiguriert ist, ein Beleuchtungslicht von einer Lichtquelle (11) zu beugen, um ein Objekt (OBJ) abzutasten, und ein reflektiertes Licht von dem Objekt (OBJ) zu beugen; und
einer Lichtführungseinheit (21), die konfiguriert ist, das Beleuchtungslicht zu der Beugungseinheit (31) zu führen und das reflektierte Licht von der Beugungseinheit (31) zu einer Lichtempfangseinheit (51, 52) zu führen,
wobei die Lichtführungseinheit (21) einen ersten Durchgangsbereich (2121) und einen zweiten Durchgangsbereich (2122) umfasst, durch die das Beleuchtungslicht hindurchgeht, und
wobei das Beleuchtungslicht in ein erstes Beleuchtungslicht und ein zweites Beleuchtungslicht durch die Lichtführungseinheit verzweigt wird,
**dadurch gekennzeichnet, dass**
die Lichtführungseinheit (21) einen reflektierenden Bereich (2123) zum Reflektieren des reflektierten Lichts umfasst,
die Lichtführungseinheit (21) eine erste Oberfläche (211), in die das Beleuchtungslicht eintritt, eine zweite Oberfläche (212), die die ersten und zweiten Durchgangsbereiche (2121, 2122) und den reflektierenden Bereich (2123) aufweist, und eine reflektierende Oberfläche (213) zum Reflektieren des Beleuchtungslichts umfasst, wobei die erste Oberfläche (211) und die zweite Oberfläche (212) einen ersten Winkel (α1) zueinander aufweisen und die zweite Oberfläche (212) und die reflektierende Oberfläche (213) einen zweiten Winkel (α2) zueinander aufweisen, wobei das zweite Beleuchtungslicht von der ersten Oberfläche (211) durch die reflektierende Oberfläche (213) reflektiert wird und von dem zweiten Durchgangsbereich (2122) emittiert wird, und
das erste Beleuchtungslicht von dem ersten Durchgangsbereich (2121) emittiert wird und das zweite Beleuchtungslicht von dem zweiten Durchgangsbereich (2122) emittiert wird, sodass eine Emissionsrichtung des ersten Beleuchtungslichts und eine Emissionsrichtung des zweiten Beleuchtungslichts einen Winkel bilden, wobei dann das erste Beleuchtungslicht und das zweite Beleuchtungslicht in die Beugungseinheit (31) eintreten.

2. Optische Vorrichtung mit:
einer Beugungseinheit (31), die konfiguriert ist, ein Beleuchtungslicht von einer Lichtquelle (11) zu beugen, um ein Objekt (OBJ) abzutasten, und ein reflektiertes Licht von dem Objekt (OBJ) zu beugen; und
einer Lichtführungseinheit (28), die konfiguriert ist, das Beleuchtungslicht zu der Beugungseinheit (31) zu führen und das reflektierte Licht von der Beugungseinheit (31) zu einer Lichtempfangseinheit (51, 52) zu führen,
wobei die Lichtführungseinheit (28) einen ersten Durchgangsbereich (2821) und einen zweiten Durchgangsbereich (2822) umfasst, durch die das Beleuchtungslicht hindurchgeht, und
wobei das Beleuchtungslicht in ein erstes Beleuchtungslicht und ein zweites Beleuchtungslicht durch die Lichtführungseinheit (28) verzweigt wird,
**dadurch gekennzeichnet, dass**
die Lichtführungseinheit (28) einen reflektierenden Bereich (2823, 2833) zum Reflektieren des reflektierten Lichts umfasst,
die Lichtführungseinheit (28) eine erste Oberfläche (281), eine zweite Oberfläche (282), die den ersten Durchgangsbereich (2821) und den reflektierenden Bereich (2822, 2832) aufweist, und eine dritte Oberfläche umfasst, die den zweiten Durchgangsbereich (2831) und den reflektierenden Bereich (2822, 2832) aufweist, wobei die zweite Oberfläche (282) und die dritte Oberfläche (283) einen vorbestimmten Winkel zueinander aufweisen, und
das erste Beleuchtungslicht von dem ersten Durchgangsbereich (2821) emittiert wird und das zweite Beleuchtungslicht von dem zweiten Durchgangsbereich (2831) emittiert wird, sodass eine Emissionsrichtung des ersten Beleuchtungslichts und eine Emissionsrichtung des zweiten Beleuchtungslichts einen Winkel bilden, wobei dann das erste Beleuchtungslicht und das zweite Beleuchtungslicht in die Beugungseinheit (31) eintreten.

3. Optische Vorrichtung mit:
einer Beugungseinheit (31), die konfiguriert ist, ein Beleuchtungslicht von einer Lichtquelle (11) zu beugen, um ein Objekt (OBJ) abzutasten, und ein reflektiertes Licht von dem Objekt (OBJ) zu beugen; und
einer Lichtführungseinheit (81, 82), die konfiguriert ist, das Beleuchtungslicht zu der Beugungseinheit (31) zu führen und das reflektierte Licht von der Beugungseinheit (31) zu einer Lichtempfangseinheit (51 - 53) zu führen,
wobei die Lichtführungseinheit (81, 82) einen Durchgangsbereich (8221) umfasst, durch den das Beleuchtungslicht hindurchgeht, und
wobei das Beleuchtungslicht in ein erstes Beleuchtungslicht und ein zweites Beleuchtungslicht durch die Lichtführungseinheit (81, 82) verzweigt wird,
**dadurch gekennzeichnet, dass**
die Lichtführungseinheit (81, 82) einen reflektierenden Bereich (8222) zum Reflektieren des reflektierten Lichts umfasst,
die Lichtführungseinheit (81, 82) eine erste Lichtführungseinheit (81) und eine zweite Lichtführungseinheit (82) umfasst, wobei die erste Lichtführungseinheit (81) eine erste Oberfläche (811), bei der das Beleuchtungslicht eintritt, eine zweite Oberfläche (812), eine dritte Oberfläche (813) und eine vierte Oberfläche (814) umfasst, wobei ein vorbestimmter Winkel zwischen der zweiten Oberfläche (812) und der dritten Oberfläche (813) sowie zwischen der zweiten Oberfläche (812) und der vierten Oberfläche (814) gebildet wird, wobei das Beleuchtungslicht durch die dritte Oberfläche (813) und die vierte Oberfläche (814) hindurchgeht, um das erste Beleuchtungslicht und das zweite Beleuchtungslicht zu bilden, und wobei die zweite Lichtführungseinheit den reflektierenden Bereich (8222) umfasst, und
das erste Beleuchtungslicht und das zweite Beleuchtungslicht von dem Durchgangsbereich (8221) derart emittiert werden, dass eine Emissionsrichtung des ersten Beleuchtungslichts und eine Emissionsrichtung des zweiten Beleuchtungslichts einen Winkel bilden, wobei dann das erste Beleuchtungslicht und das zweite Beleuchtungslicht in die Beugungseinheit (31) eintreten.

4. Optische Vorrichtung nach einem der Ansprüche 1 bis 3, wobei das Beleuchtungslicht verzweigt wird, indem ein Teil eines Lichtstrahls durch die Lichtführungseinheit (21, 28, 81, 82) räumlich geteilt wird.

5. Optische Vorrichtung nach einem der Ansprüche 1 bis 3, wobei das Beleuchtungslicht verzweigt wird, indem eine Lichtintensität durch die Lichtführungseinheit (21, 28, 81, 82) geteilt wird.

6. Optische Vorrichtung nach einem der Ansprüche 1 bis 3, wobei das Beleuchtungslicht verzweigt wird, indem das Beleuchtungslicht in eine erste Polarisationskomponente und eine zweite Polarisationskomponente, die orthogonal zu der ersten Polarisationskomponente ist, durch die Lichtführungseinheit (21, 28, 81, 82) geteilt wird.

7. Optische Vorrichtung nach einem der Ansprüche 1 bis 6, wobei das erste Beleuchtungslicht und das zweite Beleuchtungslicht Lichtmengen aufweisen, die zueinander gleich sind.

8. Optische Vorrichtung nach einem der Ansprüche 1 bis 6, wobei das erste Beleuchtungslicht und das zweite Beleuchtungslicht Lichtmengen aufweisen, die zueinander unterschiedlich sind.

9. Optische Vorrichtung nach Anspruch 1, wobei die optische Vorrichtung den nachstehend genannten Ausdruck erfüllt, ${α}_{1} + {α}_{2} = 90$ wobei α₁ der erste Winkel ist und α₂ der zweite Winkel ist.

10. Optische Vorrichtung nach einem der Ansprüche 1 bis 9, wobei die Lichtführungseinheit (21, 28, 81, 82) einen Lichtstrahldurchmesser des Beleuchtungslichts ausweitet.

11. Optische Vorrichtung nach Anspruch 1 oder 2, wobei die ersten und zweiten Durchgangsbereiche (2121, 2122, 2821, 2831) gemein sind.

12. Optische Vorrichtung nach Anspruch 2, wobei das erste Beleuchtungslicht und das zweite Beleuchtungslicht einander schneiden, bevor sie in die Beugungseinheit (31) eintreten.

13. Optische Vorrichtung nach einem der Ansprüche 1 bis 12, wobei das reflektierte Licht des ersten Beleuchtungslichts und das reflektierte Licht des zweiten Beleuchtungslichts durch ein gemeinsames optisches System (42, 43) hindurchgehen, nachdem sie durch die Lichtführungseinheit (21, 28, 81, 82) hindurchgegangen sind und bevor sie in die Lichtempfangseinheit (51-53) eintreten.

14. Optische Vorrichtung nach Anspruch 13, wobei eine Eintrittspupille des gemeinsamen optischen Systems (41, 42) über der Beugungseinheit (31) angeordnet ist.

15. Optische Vorrichtung nach Anspruch 13, wobei das gemeinsame optische System (42, 43) einen Kondensorspiegel umfasst.

16. Optische Vorrichtung nach einem der Ansprüche 1 bis 15, ferner mit einem Teleskop (70), das konfiguriert ist, einen Lichtstrahldurchmesser des Beleuchtungslichts, das durch die Beugungseinheit (31) gebeugt wird, zu vergrößern und einen Lichtstrahldurchmesser des reflektierten Lichts von dem Objekt (OBJ) zu verringern.

17. Optische Vorrichtung nach Anspruch 16, wobei die Beugungseinheit (31) bei einer Eintrittspupillenposition des Teleskops (70) angeordnet ist.

18. Optische Vorrichtung nach einem der Ansprüche 1 bis 17, wobei ein Beleuchtungsbereich des ersten Beleuchtungslichts und ein Beleuchtungsbereich des zweiten Beleuchtungslichts einander teilweise überlappen.

19. Optische Vorrichtung nach einem der Ansprüche 1 bis 18, ferner mit einer Steuerungseinheit (60), die konfiguriert ist, Entfernungsinformationen über das Objekt (OBJ) auf der Grundlage einer Ausgabe von der Lichtempfangseinheit (21, 28, 81, 82) zu beschaffen.

20. Fahrzeuginternes System (1000), das konfiguriert ist, ein Fahren eines beweglichen Geräts (500) zu unterstützen und durch das bewegliche Gerät (500) gehalten zu werden, mit der optischen Vorrichtung (100) nach einem der Ansprüche 1 bis 19.

21. Fahrzeuginternes System (1000) nach Anspruch 20, ferner mit einer Bestimmungseinheit (300), die konfiguriert ist, eine Wahrscheinlichkeit einer Kollision mit dem Objekt (OBJ) auf der Grundlage von Entfernungsinformationen über das Objekt (OBJ), die durch die optische Vorrichtung (100) beschafft werden, zu bestimmen.

22. Fahrzeuginternes System (1000) nach Anspruch 21, ferner mit einer Steuerungsvorrichtung (300), die konfiguriert ist, ein Steuerungssignal zur Erzeugung einer Bremskraft in dem beweglichen Gerät (500) in einem Fall auszugeben, bei dem die Bestimmungseinheit (300) bestimmt, dass es die Wahrscheinlichkeit einer Kollision mit dem Objekt (OBJ) gibt.

23. Fahrzeuginternes System (1000) nach Anspruch 21 oder 22, ferner mit einer Warnvorrichtung (400), die konfiguriert ist, einen Benutzer des beweglichen Körpers (500) in einem Fall zu warnen, bei dem die Bestimmungseinheit (300) bestimmt, dass es die Wahrscheinlichkeit einer Kollision mit dem Objekt (OBJ) gibt.

24. Fahrzeuginternes System (1000) nach einem der Ansprüche 21 bis 23, ferner mit einer Benachrichtigungsvorrichtung, die konfiguriert ist, Informationen über die Kollision mit dem Objekt (OBJ) nach außen zu melden.

25. Bewegliches Gerät (500) mit der optischen Vorrichtung (100) nach einem der Ansprüche 1 bis 19, wobei es konfiguriert ist, die optische Vorrichtung (100) zu halten und sich zu bewegen.

26. Bewegliches Gerät (500) nach Anspruch 25, ferner mit dem fahrzeuginternen System (1000) nach einem der Ansprüche 20 bis 24.

## Revendications

1. Dispositif optique comprenant :
une unité de déviation (31) configurée pour dévier la lumière d'illumination provenant d'une source lumineuse (11) afin de balayer un objet (OBJ), et pour dévier la lumière réfléchie par l'objet (OBJ) ; et
une unité de guidage de lumière (21) configurée pour guider la lumière d'illumination vers l'unité de déviation (31), et pour guider la lumière réfléchie provenant de l'unité de déviation (31) vers une unité de réception de lumière (51, 52),
dans lequel l'unité de guidage de lumière (21) comporte une première zone de passage (2121) et une seconde zone de passage (2122) à travers lesquelles la lumière d'illumination passe, et
dans lequel la lumière d'illumination est ramifiée en une première lumière d'illumination et une seconde lumière d'illumination par l'unité de guidage de lumière,
**caractérisé en ce que** l'unité de guidage de lumière (21) comporte une zone réfléchissante (2123) pour réfléchir la lumière réfléchie,
l'unité de guidage de lumière (21) comporte une première surface (211) dans laquelle la lumière d'illumination entre, une deuxième surface (212) présentant les première et seconde zones de passage (2121, 2122) ainsi que la zone réfléchissante (2123), et une surface réfléchissante (213) pour réfléchir la lumière d'illumination, dans lequel la première surface (211) et la deuxième surface (212) présentent un premier angle (α1) l'une par rapport à l'autre, et la deuxième surface (212) et la surface réfléchissante (213) présentent un second angle (α2) l'une par rapport à l'autre, dans lequel la seconde lumière d'illumination provenant de la première surface (211) est réfléchie par la surface réfléchissante (213) et émise à partir de la seconde zone de passage (2122), et
la première lumière d'illumination est émise depuis la première zone de passage (2121) et la seconde lumière d'illumination est émise depuis la seconde zone de passage (2122) de sorte qu'une direction d'émission de la première lumière d'illumination et une direction d'émission de la seconde lumière d'illumination forment un angle, puis la première lumière d'illumination et la seconde lumière d'illumination entrent dans l'unité de déviation (31).

2. Dispositif optique comprenant :
une unité de déviation (31) configurée pour dévier la lumière d'illumination provenant d'une source lumineuse (11) afin de balayer un objet (OBJ), et pour dévier la lumière réfléchie par l'objet (OBJ) ; et
une unité de guidage de lumière (28) configurée pour guider la lumière d'illumination vers l'unité de déviation (31), et pour guider la lumière réfléchie provenant de l'unité de déviation (31) vers une unité de réception de lumière (51, 52),
dans lequel l'unité de guidage de lumière (28) comporte une première zone de passage (2821) et une seconde zone de passage (2831) à travers lesquelles la lumière d'illumination passe, et
dans lequel la lumière d'illumination est ramifiée en une première lumière d'illumination et une seconde lumière d'illumination par l'unité de guidage de lumière (28),
**caractérisé en ce que** l'unité de guidage de lumière (28) comporte une zone réfléchissante (2822, 2832) pour réfléchir la lumière réfléchie,
l'unité de guidage de lumière (28) comporte une première surface (281), une deuxième surface (282) présentant la première zone de passage (2821) et la zone réfléchissante (2822, 2832), et une troisième surface (283) présentant la seconde zone de passage (2831) et la zone réfléchissante (2822, 2832),
dans lequel la deuxième surface (282) et la troisième surface (283) présentent un angle prédéterminé l'une par rapport à l'autre, et
la première lumière d'illumination est émise depuis la première zone de passage (2821) et la seconde lumière d'illumination est émise depuis la seconde zone de passage (2831) de sorte qu'une direction d'émission de la première lumière d'illumination et une direction d'émission de la seconde lumière d'illumination forment un angle, puis la première lumière d'illumination et la seconde lumière d'illumination entrent dans l'unité de déviation (31).

3. Dispositif optique comprenant :
une unité de déviation (31) configurée pour dévier la lumière d'illumination provenant d'une source lumineuse (11) afin de balayer un objet (OBJ), et pour dévier la lumière réfléchie par l'objet (OBJ) ; et
une unité de guidage de lumière (81, 82) configurée pour guider la lumière d'illumination vers l'unité de déviation (31), et pour guider la lumière réfléchie provenant de l'unité de déviation (31) vers une unité de réception de lumière (51-53),
dans lequel l'unité de guidage de lumière (81, 82) comporte une zone de passage (8221) à travers laquelle la lumière d'illumination passe, et
dans lequel la lumière d'illumination est ramifiée en une première lumière d'illumination et une seconde lumière d'illumination par l'unité de guidage de lumière (81, 82), **caractérisé en ce que** l'unité de guidage de lumière (81, 82) comporte une zone réfléchissante (8222) pour réfléchir la lumière réfléchie,
l'unité de guidage de lumière (81, 82) comprend une première unité de guidage de lumière (81) et une seconde unité de guidage de lumière (82), dans lequel la première unité de guidage de lumière (81) comprend une première surface (811) où la lumière d'illumination entre, une deuxième surface (812), une troisième surface (813) et une quatrième surface (814), dans lequel un angle prédéterminé est formé entre la deuxième surface (812) et la troisième surface (813), ainsi qu'entre la deuxième surface (812) et la quatrième surface (814), dans lequel la lumière d'illumination passe à travers la troisième surface (813) et la quatrième surface (814), pour former la première lumière d'illumination et la seconde lumière d'illumination, et dans lequel la seconde unité de guidage de lumière (82) comprend la zone réfléchissante (8222), et la première lumière d'illumination et la seconde lumière d'illumination sont émises depuis la zone de passage (8221) de sorte qu'une direction d'émission de la première lumière d'illumination et une direction d'émission de la seconde lumière d'illumination forment un angle, puis la première lumière d'illumination et la seconde lumière d'illumination entrent dans l'unité de déviation (31).

4. Dispositif optique selon l'une quelconque des revendications 1 à 3, dans lequel la lumière d'illumination est ramifiée en divisant spatialement une partie d'un faisceau lumineux par l'unité de guidage de lumière (21, 28, 81, 82).

5. Dispositif optique selon l'une quelconque des revendications 1 à 3, dans lequel la lumière d'illumination est ramifiée en divisant une intensité lumineuse par l'unité de guidage de lumière (21, 28, 81, 82).

6. Dispositif optique selon l'une quelconque des revendications 1 à 3, dans lequel la lumière d'illumination est ramifiée en divisant la lumière d'illumination en une première composante de polarisation et une seconde composante de polarisation orthogonale à la première composante de polarisation par l'unité de guidage de lumière (21, 28, 81, 82).

7. Dispositif optique selon l'une quelconque des revendications 1 à 6, dans lequel la première lumière d'illumination et la seconde lumière d'illumination ont des quantités de lumière égales l'une à l'autre.

8. Dispositif optique selon l'une quelconque des revendications 1 à 6, dans lequel la première lumière d'illumination et la seconde lumière d'illumination ont des quantités de lumière différentes l'une de l'autre.

9. Dispositif optique selon la revendication 1, dans lequel le dispositif optique satisfait à l'expression suivante, ${α}_{1} + {α}_{2} = 90$ où α₁ est le premier angle, et α₂ est le second angle.

10. Dispositif optique selon l'une quelconque des revendications 1 à 9, dans lequel l'unité de guidage de lumière (21, 28, 81, 82) élargit un diamètre de faisceau lumineux de la lumière d'illumination.

11. Dispositif optique selon la revendication 1 ou 2, dans lequel les première et seconde zones de passage (2121, 2122, 2821, 2831) sont communes.

12. Dispositif optique selon la revendication 2, dans lequel la première lumière d'illumination et la seconde lumière d'illumination se croisent avant d'entrer dans l'unité de déviation (31).

13. Dispositif optique selon l'une quelconque des revendications 1 à 12, dans lequel la lumière réfléchie de la première lumière d'illumination et la lumière réfléchie de la seconde lumière d'illumination traversent un système optique commun (42, 43) après avoir traversé l'unité de guidage de lumière (21, 28, 81, 82) et avant d'entrer dans l'unité de réception de lumière (51-53).

14. Dispositif optique selon la revendication 13, dans lequel une pupille d'entrée du système optique commun (41, 42) est située au-dessus de l'unité de déviation (31).

15. Dispositif optique selon la revendication 13, dans lequel le système optique commun (42, 43) comporte un miroir condenseur.

16. Dispositif optique selon l'une quelconque des revendications 1 à 15, comprenant en outre un télescope (70) configuré pour augmenter un diamètre de faisceau lumineux de la lumière d'illumination déviée par l'unité de déviation (31) et pour réduire un diamètre de faisceau lumineux de la lumière réfléchie par l'objet (OBJ).

17. Dispositif optique selon la revendication 16, dans lequel l'unité de déviation (31) est disposée à une position de pupille d'entrée du télescope (70).

18. Dispositif optique selon l'une quelconque des revendications 1 à 17, dans lequel une plage d'illumination de la première lumière d'illumination et une plage d'illumination de la seconde lumière d'illumination se chevauchent partiellement.

19. Dispositif optique selon l'une quelconque des revendications 1 à 18, comprenant en outre une unité de commande (60) configurée pour acquérir des informations de distance sur l'objet (OBJ) sur la base d'une sortie de l'unité de réception de lumière (21, 28, 81, 82).

20. Système monté sur véhicule (1000) configuré pour supporter la conduite d'un dispositif mobile (500) et pour être porté par le dispositif mobile (500), comprenant le dispositif optique (100) selon l'une quelconque des revendications 1 à 19.

21. Système monté sur véhicule (1000) selon la revendication 20, comprenant en outre une unité de détermination (300) configurée pour déterminer une probabilité de collision avec l'objet (OBJ) sur la base des informations de distance sur l'objet (OBJ) acquises par le dispositif optique (100).

22. Système monté sur véhicule (1000) selon la revendication 21, comprenant en outre un dispositif de commande (300) configuré pour émettre un signal de commande pour générer une force de freinage dans le dispositif mobile (500) dans le cas où l'unité de détermination (300) détermine qu'il existe une probabilité de collision avec l'objet (OBJ).

23. Système monté sur véhicule (1000) selon la revendication 21 ou 22, comprenant en outre un dispositif d'avertissement (400) configuré pour avertir un utilisateur du corps mobile (500) dans le cas où l'unité de détermination (300) détermine qu'il existe une probabilité de collision avec l'objet (OBJ).

24. Système monté sur véhicule (1000) selon l'une quelconque des revendications 21 à 23, comprenant en outre un dispositif de notification configuré pour notifier à l'extérieur des informations sur la collision avec l'objet (OBJ).

25. Dispositif mobile (500) comprenant le dispositif optique (100) selon l'une quelconque des revendications 1 à 19, et configuré pour maintenir le dispositif optique (100) et pour se déplacer.

26. Dispositif mobile (500) selon la revendication 25, comprenant en outre le système monté sur véhicule (1000) selon l'une quelconque des revendications 20 à 24.
